# EUROPEAN PATENT APPLICATION

(11) **EP 4 530 825 A1**
(43) Date of publication of application: **02.04.2025**
(21) Application number: 23200749.2
(22) Date of filing: 29.09.2023
(51) Int. Cl.: G06F 8/34

(54) **METHOD AND SYSTEM FOR GENERATION OF ENGINEERING PROJECT BASED ON PID DIAGRAM**

(71) Applicant: Siemens Aktiengesellschaft, 80333 München (DE)
(72) Inventor: ANTONY, Elvis, 560102 Bangalore (IN); LEELAVATHY, Grace, 635126 Hosur, Tamilnadu (IN); ORUGANTI, Srivathsa Simha, 560100 Bangalore, Karnataka (IN); S, Subramanyam, 641041 Comabatore (IN)
(74) Representative: Isarpatent

(57) **Abstract**

The present invention provides a method and system for automatic generation of an engineering program for an engineering project. The method comprises generating, by the processing unit (202), a name graph based on an analysis of an engineering project of the industrial plant (106). The method further comprises analyzing, by the processing unit (202), a process and instrumentation diagram associated with the engineering project. The method further comprises determining, by the processing unit (202), a set of automation templates from the generated plurality of automation templates based on the application of the maximizing function on the at least one key performance indicator. The method further comprises outputting, by the processing unit (202), the determined set of automation templates to a user, wherein the determined set of automation templates are recommendations for the user to generate an engineering program for the engineering project.

## Description

The present invention relates to a field of engineering of computer assisted programming, and more particularly relates to a method and system for generation of an engineering project based on a process and instrumentation diagram associated with an industrial plant.

An engineering project comprises information associated with a plurality of engineering objects which function together to complete a plurality of industrial processes in an industrial plant. Examples of the industrial plant includes but is not limited to a power plant, a manufacturing plant, and a water treatment plant. Examples of the plurality of engineering objects includes but is not limited to a programmable logic controller, one or more field devices, or any other automation devices. Examples of the one or more field devices includes but is not limited to, motors, rotors, mixers, furnaces, heaters, refrigerators, control valves, pumps, and actuators. The information associated with the plurality of engineering object comprises configuration information to configured the plurality of engineering objects to operate to achieve a plurality of key performance indicators of the industrial plant. The plurality of key performance indicators comprises information associated with an amount of energy consumed by the industrial plant during operation, an amount of water consumed by the industrial plant during operation, and a production time of the industrial plant. Examples of the configuration information includes connection schemas, a list of variants, a cost and a plurality of engineering programs associated with the plurality of engineering objects.

The engineering project further comprises programming code which is executed by a programmable logic controller to control the plurality of engineering objects in the engineering project. In one example, the engineering program comprises programming code written in at least one of an International electrotechnical commission programming language (IECPL), JAVA, C++ or python.

In conventional systems, the engineering project is manually generated by an engineer. To generate the engineering project efficiently, the engineer has to study and analyze a plurality of parameters associated with each engineering object of the plurality of engineering objects and understand an effect of each parameter on the plurality of key performance indicators of the industrial plant.

Each engineering object of the plurality of engineering objects has a plurality of variants which are manufactured by one or more original equipment manufacturers. Each variant of the plurality of variants of a specific engineering object differs from other variants in one or more attributes such as power rating, voltage rating, software configurations, and hardware configurations. In one example, a plurality of attributes of the plurality of engineering objects comprises information associated with the plurality of variants of the plurality of engineering objects. Thus each variant of the plurality of variants of a specific engineering object has a different effect on the plurality of key performance indicators of the industrial plant.

To generate an optimal engineering project, the engineer has to study information associated with the plurality of variants of each engineering object of the plurality of engineering objects and also understand an effect of each variant on the plurality of key performance indicators of the industrial plant. Then, the engineer has to manually select an appropriate set of engineering objects and then generate electromechanical connections between the set of engineering objects. The engineer has to select and connect the set of engineering objects such that the set of engineering object function optimally to achieve the plurality of key performance indicators of the industrial plant.

Thus, to generate an optimum engineering project, the engineer has to spend a large amount of labour and time to understand and select the set of engineering object. Furthermore, the engineer also has to study an effect of the set of engineering objects on the plurality of key performance indicators.

In light of above, there exists a need for an efficient method and system for automatic generation of an engineering project based on a process and instrumentation diagram.

The object of the invention is achieved by a computer implemented method of automatically generating an engineering project based on a process and instrumentation diagram associated with an industrial plant. An automation module is configured to automatically generate the engineering project based on the process and instrumentation diagram associated with the industrial plant. Examples of the industrial plant includes but is not limited to a power plant, a manufacturing plant, and a water treatment plant. The process and instrumentation diagram comprises a pictorial representation of interconnections between a set of engineering objects. The set of engineering objects comprises programmable logic controllers, one or more field devices, or any other automation devices. Examples of the one or more field devices includes but is not limited to, motors, rotors, mixers, furnaces, heaters, refrigerators, control valves, pumps, and actuators.

In other words, the automation module is configured to generate the engineering project based on the set of engineering objects. The generated engineering project comprises configuration information for configuring the set of engineering objects indicated in the process and instrumentation diagram. The configuration information comprises one or more connection schemas, one or more programming blocks, a list of variants and control philosophy required to configure the set of engineering objects to operate and achieve a specific objective in the industrial plant.

In a preferred embodiment, the method comprises receiving, by a processing unit, a plurality of engineering projects. The plurality of engineering projects comprises information associated with a plurality of engineering objects. The plurality of engineering objects are configured to implement a plurality of industrial processes in the industrial plant. Examples of the plurality of engineering objects may include, for example, a programmable logic controller, one or more field devices, or any other automation devices. Examples of the one or more field devices includes but is not limited to, motors, rotors, mixers, furnaces, heaters, refrigerators, control valves, pumps, and actuators. Examples of the plurality of industrial processes include, but is not limited to a heating process, a cooling process and a melting process.

Each of the plurality of engineering projects comprises at least a plurality of programming blocks, a process and instrumentation diagram and a control philosophy which comprise configuration information associated with the plurality of engineering objects. The configuration information comprises information indicative of a manner in which the plurality of engineering objects are connected and operated to achieve a specific objective in the industrial plant. The specific objective is associated with a plurality of key performance indicators of the industrial plant. Example of the plurality of key performance indicators include but is not limited to an energy consumption of the industrial plant, a water usage of the industrial plant, a turnover time of the industrial plant and a operation cost of the industrial plant. Each engineering project of the plurality of engineering project is configured to cause the plurality of engineering objects to function and achieve a specific combination of key performance indicators of the plurality of key performance indicators. In one example, each of the plurality of engineering projects comprises a plurality of documents which contain information about the manner in which the plurality of engineering objects are connected and operated to achieve the specific objective in the industrial plant.

Furthermore, each engineering project of the plurality of engineering projects comprises information associated with a plurality of variants of the plurality of engineering objects. Each variant of the plurality of variants differ from each other in voltage rating, power rating, year of manufacturing, vibration resistance, and water resistance.

It is noted that each engineering project of the plurality of engineering projects comprises at least one process and instrumentation diagram and the plurality of programming blocks. The process and instrumentation diagram comprises information associated with interconnection between the plurality of engineering objects in each engineering project of the plurality of engineering projects. The plurality of programming blocks comprises programming code which is executed by a controller device in the industrial plant to control operations of the plurality of engineering objects. In other words, the plurality of engineering objects are connected in the industrial plant based on the at least one process and instrumentation diagram. The controller device, such as a programmable logic controller, is configured to execute the plurality of programming blocks to control the plurality of engineering objects to achieve a specific objective in the industrial plant.

Each engineering project further comprises information associated with a plurality of key performance indicators of the industrial plant, when the engineering project is implemented in the industrial plant. Thus, in other words, each engineering project of the plurality of engineering projects comprises configuration information to configure the plurality of engineering objects to operate and achieve a specific value for each of the plurality of key performance indicators of the industrial plant. Information associated with the plurality of key performance indicators are stored as a textual document in each of the plurality of engineering projects.

In one example, the plurality of engineering projects comprise information about the plurality of programming blocks associated with the plurality of engineering objects. The plurality of engineering projects further comprises information associated with an interdependency between the plurality of programming blocks and the plurality of key performance indicators of the industrial plant. In one example, each programming block of the plurality of programming block is linked to a specific value of at least one key performance indicator of the plurality of key performance indicators of the industrial plant.

In the preferred embodiment, the method further comprises analyzing, by the processing unit, the plurality of engineering projects based on an application of a natural language processing algorithm on each engineering project of the plurality of engineering projects. The natural language processing algorithm is configured to analyze each process and instrumentation diagram and each programming block in each engineering project of the plurality of engineering projects. In one example, the natural language processing algorithm is at least one of a named entity recognition algorithm, a text summarization algorithm, and a tokenization algorithm.

The method further comprsies extracting a plurality of data items from the analyzed plurality of engineering projects, based on the analysis. The plurality of data items comprises information associated with each engineering object of the plurality of engineering objects in the plurality of engineering projects. Examples of the information associated with each engineering object of the plurality of engineering objects comprises a name, a voltage rating, a power rating, a purpose, a function, a specification, a manufacturer details, and a maintenance details associated with the plurality of engineering objects. For example, in a case where the plurality of engineering projects comprises a document which comprises a first statement "voltage rating of motor is 300 volts" and a second statement "a first object is a motor", then the extracted plurality of data items comprises a first data item "first object", a second data item "motor", a third data item "300 volts" and a fourth data item "voltage rating". In one example, the plurality of data items comprise a plurality of tokens generated by application of a tokenization algorithm on the plurality of documents of the plurality of engineering projects.

In the preferred embodiment, the method further comprises applying, by the processing unit, a dependency parsing algorithm on the plurality of data items and each engineering project of the plurality of engineering projects. The processing unit is further configured to analyze a syntactic structure of interdependencies between one or more data items of the plurality of data items, based on the application of the dependency parsing algorithm. Furthermore, the dependency parsing algorithm is applied on one or more textual data comprised within the plurality of data items. The dependency parsing algorithm is configured to identify a plurality of grammatical relationships between two or more data items of the plurality of data items based on the application of the dependency parsing algorithm. Each data item of the plurality of data items is indicative of information about at least one engineering object of the plurality of engineering objects of the plurality of engineering projects. Thus, the plurality of grammatical relationships between the plurality of data items is indicative of a plurality of dependencies between the plurality of data items and two or more engineering objects of the plurality of engineering objects of the plurality of engineering projects.

In one example, the processing unit is configured to filter the plurality of data items with one or more named entity recognition (NER) algorithms to identify mentions of each of the plurality of engineering objects in the plurality of data items.

The method further comprises analyzing, by the processing unit, the identified mentions of the plurality of engineering objects. The processing unit is further configured to assign a plurality of semantic roles to the identified mentions of the plurality of engineering objects. The plurality of semantic roles are assigned by application of a semantic role labelling algorithm on the identified mentions of the plurality of engineering objects. The semantic role labelling algorithm is configured to assign semantic roles to the identified mentions of the plurality of engineering objects based on the plurality of dependency trees. The semantic roles of each component of the plurality of engineering objects is indicative of a relationship of each engineering object with other engineering objects of the plurality of engineering objects. Examples of the semantic role labelling algorithms include, but is not limited to AllenNLP Algorithm or PropBank project algorithm.

The method further comprises analyzing, by the processing unit, the plurality of grammatic relationships and the plurality of assigned semantic roles to determine a plurality of interconnections between engineering objects in the plurality of engineering objects. The plurality of interconnections between engineering objects among the plurality of engineering objects is indicative of a plurality of interdependencies between behaviour of the plurality of engineering objects.

The processing unit is configured to generate a plurality of dependency trees based on the determined plurality of grammatical relationships, the determined plurality of semantic roles, and the plurality of interconnections between one or more engineering objects of the plurality of engineering objects. The plurality of dependency trees further comprises information associated with the plurality of interrelationships between one or more data items of the plurality of data items and the one or more engineering objects of the plurality of engineering objects. Each dependency tree of the plurality of dependency trees is representative of a plurality of interdependencies between the plurality of data items and the plurality of engineering objects extracted from the plurality of engineering projects.

In other words, the method further comprises determining the plurality of interrelationships between the plurality of data items and the plurality of engineering objects and generating the plurality of dependency trees based on the plurality of interrelationships.

It is noted that the plurality of engineering projects comprises information associated with interdependency between the plurality of engineering objects, the plurality of programming blocks and the plurality of key performance indicators of the industrial plant. Thus, the plurality of dependency trees comprises information associated with a plurality of interrelationships between the plurality of programming blocks and the plurality of key performance indicators of the industrial plant.

In one example, the plurality of engineering projects comprises a document comprising a first statement "voltage rating of motor is 300 volts" and a second statement "a first object is a motor" . In such a case, the processing unit determines a first interrelationship that the first data item (voltage rating) is linked to the second data item (300 volts). Furthermore, the processing unit determines a second interrelationship that the second data item (motor) is linked to the third data item (300 volts). In other words, the processing unit determines information associated with the plurality of interrelationships between one or more data items of the plurality of data items and one or more engineering objects of the plurality of engineering objects.

In the preferred embodiment, the method further comprises generating, by the processing unit, a name graph based on the plurality of dependency trees. In one example, the processing unit is configured to concatenate the plurality of dependency trees to generate the name graph based on a set of rules. In another example, the processing unit is configured to combine the plurality of dependency trees by application of a mathematical operation such as a union operation or an intersection operation on the plurality of dependency trees. The processing unit is configured to merge the plurality of dependency trees based on an analysis of the assigned plurality of semantic roles.

The name graph comprises a plurality of nodes. Each node of the plurality of nodes comprises information associated with a specific engineering object of the plurality of engineering objects of the plurality of engineering projects. Thus, the name graph comprises information associated with the plurality of dependencies between the plurality of data items and the plurality of engineering objects.

For example, the plurality of nodes comprises a first node comprising information about the first data item "first object", a second node comprising information about the second data item "motor", a third node comprising information about the third data item "300 volts" and a fourth node comprising information about the fourth data item "voltage rating". Furthermore, the name graph comprises a plurality of links between the plurality of nodes to represent the plurality of interrelationships between the plurality of data items.

The plurality of nodes further comprises information associated with the plurality of programming blocks in each engineering project of the plurality of engineering projects. Examples of the information associated with the plurality of programming blocks include but is not limited to names of functions, data flow in each of the plurality of programming blocks, classes in the plurality of programming blocks, variable names, and data types in the plurality of programming blocks. Information comprised in the plurality of nodes further comprises information associated with hierarchical dependencies between classes, functions, and subroutines within the plurality of programming blocks. The name graph further comprises information associated with interrelationships between each of the plurality of programming blocks and the plurality of key performance indicators of the industrial plant.

Thus the name graph comprises information associated with a plurality of dependencies between each of the plurality of engineering objects, and the plurality of key performance indicators of the industrial plant, and the plurality of programming blocks in the plurality of engineering projects.

In the preferred embodiment, the generated name graph has a plurality of dimensions. Each dimension of the plurality of dimensions represents a specific aspect of each engineering project of the plurality of engineering projects. In one example, a first dimension of the plurality of dimensions comprises one or more nodes associated with information associated with a programming code in the plurality of programming blocks of each of the plurality of engineering projects. The information associated with the programming code comprises information associated with a programming language, list of hierarchies and dependencies, classes, variables, and code snippets in the programming code. Furthermore, a second dimension of the plurality of dimensions comprises one or more nodes comprising information associated with a user interface in each engineering project of the plurality of engineering projects. Furthermore, a third dimension comprises information about the one or more industrial contexts of each engineering object of the plurality of engineering objects. The third dimension further comprises information associated with the plurality of variants of each engineering object of the plurality of engineering objects.

Advantageously, the name graph comprises information associated with interconnections, the plurality of variants, hardware configurations, software configurations, engineering programs, and a plurality of functionalities associated with each engineering object of the plurality of engineering objects in the plurality of engineering projects. Furthermore, the name graph comprises information associated with interconnections and dependencies between the plurality of engineering objects and the plurality of variants, the hardware configurations, the software configurations, the engineering programs, the plurality of industrial contexts, the plurality of domains, and the plurality of functionalities of the plurality of engineering objects. Thus, advantageously, the processing unit is configured to extract knowledge from the plurality of engineering objects of the plurality of engineering project. Thus, a huge amount of manual labour and time used to extract knowledge is eliminated. Furthermore, advantageously, since the engineering project is generated based on the generated name graph, the generated engineering project retains knowledge of interdependencies and interelationships between the plurality of engineering objects and the plurality of key performance indicators.

In one example, the name graph comprises information associated with a specific engineering object, which is a motor. In such a case, the name graph comprises a first set of nodes comprising information associated with a plurality of variants of the motor. Furthermore, a second set of nodes in the name graph comprises information associated with a process and instrumentation diagram icon/template associated with the motor. Furthermore, a third set of nodes in the name graph comprises information associated with a usage template of the motor. The usage template indicates information associated with the motor such as a voltage rating, a power rating, a current rating, a speed, and an input-output port of the motor.

In the preferred embodiment, the method further comprises analyzing, by the processing unit, the name graph to determine a plurality of name graph segments in the name graph. Each of the plurality of name graph segments comprises one or more nodes comprising information about a specific process in a plurality of processes implemented in the plurality of engineering projects. Examples of the specific process comprises but is not limited to a heating process, a cooling process, a transporting process, a chemical process and a mechanical process. In such a case, the plurality of name graph segments are determined based on an analysis of information in the one or more nodes. In such a case, each name graph segment of the plurality of name graph segments comprises information associated with a specific process of the plurality of processes implemented in the plurality of engineering projects.

Each process of the plurality of processes is performed by a combination of two or more engineering objects in the plurality of engineering objects. For example, a process such as a transportation process is performed by a combination of engineering objects comprising a first engineering object such as a conveyor belt in conjunction with a second engineering object such as a autonomous guided vehicle, and a third engineering object such as a pick and place robot. In such a case, each node in a name graph segment associated with the transportation process comprises information associated with at least one of the first, the second, and the third engineering object.

Each node of the plurality of name graph segments comprises information associated with a specific functionality of a specific engineering object of the combination of the tow or more engineering objects. The specific functionality associated with a specific engineering object includes at least one function of a plurality of functions of the specific engineering object. In one example, the specific engineering object is a motor which is used for the plurality of functionalities such as transportation, compression of air, drilling of metals, and milling of powder. In a case where the specific engineering object is used for drilling of metals, then the specific functionality of the specific engineering object is to drill metals.

In another example, the plurality of name graph segments are determined based on an analysis of an arrangement of the plurality of nodes of the name graph. For example, the processing unit is configured to receive from a database, a plurality of name graph structures which are stored in the database. Each of the plurality of name graph structures has a structure in accordance with which a set of nodes of the name graph structure are arranged. The plurality of name graph structures are stored in a database or a knowledge graph repository. In one example, the plurality of name graph structures are received from a user.

Each name graph structure of the plurality of name graph structures comprises a knowledge graph which indicates a specific process of a plurality of industrial processes. The knowledge graph associated with the specific process comprises information associated with one or more engineering objects which are configured to perform the specific process in a industrial plant.

In such a case, the processing unit is configured to compare a structure of a portion of the name graph with a structure of each name graph structure of the plurality of name graph structures. The structure of the portion of the name graph is indicative of an arrangement of two or more nodes in the portion of the name graph and interconnections between the two or more nodes. Further, the processing unit is configured to match the structure of the portion of the name graph with at least one name graph structure of the plurality of name graph structures. The processing unit is further configured to assign the portion of the name graph to a specific process associated with the at least one name graph structure.

In another example, the plurality of name graph segments are determined by application of a neural network on the name graph. The neural network is trained on a training data set comprising information associated with a plurality of industrial processes and the plurality of name graph structures.

The method further comprises analyzing, by the processing unit, the plurality of name graph segments to determine a logic structure of each name graph segment of the plurality of name graph segments. A logic structure of a name graph segment is indicative of an arrangement of two or more nodes in the name graph segment. In one example, the processing unit is configured to determine the logic structure of each name graph segment of the plurality of name graph segment by application of a pattern recognition algorithm on a set of nodes in each name graph segment of the plurality of name graph segments. The processing unit is further configured to compare the logic structure of each name graph segment of the plurality of name graph segments with each other. The logic structure of each name graph segment of the plurality of name graph segments is compared with other name graph segments by application of a graph similarity algorithm on the plurality of name graph segments. Examples of the plurality of name graph segments include but is not limited to Graph Edit Distance (GED) algorithm, subgraph matching algorithms, and a spectral graph similarity algorithm.

The method further comprises determining, by the processing unit, two or more name graph segments from the plurality of name graph segments based on the comparison, such that the determined two or more name graph segments have similar logic structures. In one example, the two or more name graph segments are determined by the processing unit based on a determination that the arrangement of the two or more nodes in each name graph segment of the two or more name graph segments, are similar to each other. In one example, the processing unit is configured to tag the two or more name graph segments together.

In the preferred embodiment, the method further comprises determining, by the processing unit, one or more name graph segments which has a logic structure which is repeated throughout the name graph. In one example, the one or more name graph segments are determined by application of a machine learning algorithm on the name graph. The machine learning algorithm is one of a supervised learning algorithm and an unsupervised learning algorithm. In one example, the machine learning algorithm is a pattern recognition algorithm which is configured to determine a plurality of patterns in an arrangement of the plurality of nodes in the name graph. In such a case, the machine learning algorithm is configured to determine that one or more patterns from the plurality of patterns, are repeated throughout the name graph. The set of name graph segments are determined by the processing unit based on an analysis of the one or more patterns which are determined to be repeated throughout the name graph.

In the preferred embodiment, the method further comprises classifying, by the processing unit, the plurality of name graph segments into a plurality of groups such that each group of the plurality of groups is representative of a specific industrial process of a plurality of industrial processes associated with the plurality of engineering projects.

In the preferred embodiment, the method further comprises generating, by the processing unit, a plurality of alternate representations for a set of nodes in each name graph segment of each group of the plurality of groups. In one example, the plurality of alternate representations for the set of nodes in a name graph segment is generated by a plurality of steps. A first step of the plurality of steps comprises rearranging, by the processing unit, one or more nodes in the set of nodes of the name graph segment randomly to generate a new arrangement of the set of nodes in the name graph segment. In one example, the processing unit is configured to generate the new arrangement by application of a randomizing algorithm such as a random node permutation algorithm on the set of nodes in the name graph segment. A second step of the plurality of steps is to validate the new arrangement of the set of nodes by comparing the new arrangement of the set of nodes to a plurality of arrangements of nodes in the name graph. In a case where the new arrangement of the set of nodes is compatible with a portion of the name graph, then the new arrangement of the set of nodes is validated. A third step of the plurality of steps is that in a case where the new arrangement of the set of nodes is validated, then the new arrangement of the set of nodes is added to a context stack. The processing unit is configured to generate at least one alternate representation of the plurality of alternate representations of the set of nodes based on the new arrangement of the context stack. In other words, the processing unit is configured to generate the plurality of alternate representations of the set of nodes of each name graph segments of the plurality of name graph segments.

The context stack is a memory structure in which the plurality of alternate representations of the set of nodes which corresponds to each name graph segment are populated by the processing unit. Furthermore, the processing unit is configured to generate one or more name graph segments from each alternate representation of the generated plurality of alternate representations of the set of nodes in the plurality of name graph segments. The method further comprises appending, by the processing unit, the generated one or more name graph segments into the name graph. In one example, the generated one or more name graph segments are appended into the name graph based on one or more rules received from a user via an input device. The plurality of alternate representations of the set of nodes is indicative of knowledge which is newly generated from existing knowledge in the name graph and the plurality of name graph segments. Thus, the newly generated one or more name graph segment comprises knowledge which is absent in the plurality of engineering projects. Advantageously, by appending the generated one or more name graph segments into the name graph, the processing unit is generating knowledge which is non existent in the plurality of engineering projects. Thus, the processing unit is configured to generate insights, knowledge and connections which are new compared to knowledge already existing in the plurality of engineering projects.

The method further comprises iteratively executing, by the processing unit, a plurality of iterative steps to generate a plurality of automation templates from the name graph. In a first step of the plurality of iterative steps, the processing unit is configured to select a first name graph segment from the plurality of name graph segments.

In a second step, the processing unit is configured to analyze the first name graph segment by application of a natural language processing algorithm on the first name graph segment. Information about a first process associated with the first name graph segment is indicated in at least one node of a set of nodes of the first name graph segment. Thus, the processing unit is configured to determine the first process associated with the first name graph segment based on the analysis.

In a third step of the plurality of iterative steps, the processing unit is configured to analyze each name graph segment in the plurality of groups of name graph segments to determine a process associated with the name graph segment. Furthermore, the processing unit is configured to compare the first process with the process determined from each name graph segment of the plurality of name graph segments. The processing unit is further configured to determine, from the plurality of name graph segments, a set of processes which are similar to the first process, based on the comparison.

In a fourth step of the plurality of iterative step, a set of name graph segments are determined by the processing unit, based on the analysis of the determined set of processes. The determined set of name graph segments of the name graph comprises information associated with at least one process of the set of processes. In other words, the method further comprises analyzing, by the processing unit, the plurality of groups of name graph segments to determine the set of name graph segments associated with the set of processes which are similar to the first process. It is noted that each name graph segment comprises information associated with at least one engineering object of the plurality of engineering objects. Thus, in other words, the set of name graph segments comprises information associated with one or more engineering objects.

The method further comprises determining, by the processing unit, one or more engineering objects of the plurality of engineering objects based on an analysis of the determined set of name graph segments.

The method further comprises generating at least one automation template for the first process based on the information in the determined set of name graph segments and information associated with the one or more engineering objects. The determined set of name graph segments comprises information associated with interrelationship between the one or more engineering objects and a set of key performance indicators of the industrial plant. Thus, the at least one automation template comprises information associated with interrelationship between the one or more engineering objects and the set of key performance indicators of the industrial plant. In one example, the at least one automation template comprises information which is indicative of a variation in the set of key performance indicators of the industrial plant, when each engineering object of the one or more engineering objects are used in the industrial plant. The at least one automation template further comprises information associated with one or more programming blocks which are configured to cause the one or more engineering object to generate a specific value for each of the set of key performance indicators of the industrial plant. The at least one automation template further comprises information associated with the set of name graph segments.

In other words, the at least one automation template comprises information associated with an interrelationship between each of the first process, the one or more engineering objects, and at least one key performance indicator of the plurality of key performance indicators of the industrial plant. The at least one automation template further comprises a set of programming blocks of the plurality of programming blocks. A controller device in the industrial plant is configured to execute the set of programming blocks to control the one or more engineering objects such that the industrial plant achieves the at least one key perfomance parameter. In other words, the at least one automation template comprises a configuration information and the set of programming blocks required to control the one or more engineering objects to execute the first process and achieve an optimum value for the at least one key performance indicator of the industrial plant.

For example, in a case where the first process is a process to warm water, the at least one automation template comprises a first connection schema, and a first programming block. The first connection schema comprises information to connect the first engineering object and the second engineering objects such that a temperature of water in the industrial plant is maintained below 100 degree Celsius. The first programming block comprises computer code which is executed by a controller device to control the first engineering object and the second engineering objects such that a temperature of water is maintained below 100 degree Celsius

In a case where the at least one automation template is associated with a second process to boil water, then the at least one automation template comprises information about a second connection schema, and a second programming file for the first engineering object and the second engineering object. For example, for the boiling water context, the first engineering object and the second engineering objects are configured such that a temperature of water is increased above 100 degree Celsius.

The method further comprises executing the plurality of iterative steps iteratively to until a plurality of automation templates are generated for the plurality of engineering objects and the plurality of industrial processes in the plurality of engineering projects. In other words, the method comprises generating, by the processing unit, the plurality of automation templates for the plurality of engineering objects of the plurality of engineering projects. Each of the plurality of automation templates comprise information required to configure and control one or more engineering objects of the plurality of engineering objects to execute at least one industrial process of the plurality of industrial processes and achieve at least one key performance indicator of the industrial plant.

In one example, the processing unit is configured to extract, from the name graph a plurality of interelationships between the plurality of automation templates and the plurality of name graph segments. It is noted that each of the plurality of automation templates comprises information associated with a specific set of name graph segments of the plurality of name graph segments. Thus the processing unit is configured to generate a mapping between each the plurality of automation templates to a specific name graph segment of the plurality of name graph segments. It is noted that each of the plurality of name graph segments comprises information associated with one or more engineering objects of the plurality of engineering objects. Thus, the processing unit is configured to determine a plurality of interelationships between the plurality of automation templates and the plurality of engineering objects based on the generated mapping. Thus, the processing unit is configured to determine a plurality of interelationships between the plurality of automation templates and the plurality of engineering objects based on the generated mapping.

The method further comprises generating, a master name graph based on an analysis of the name graph, the plurality of engineering objects and the plurality of automation templates. In one example, the master name graph is generated based on the determined plurality of interrelationships between the plurality of automation templates and the plurality of engineering objects. The processing unit is configured to add, to the name graph, information associated with the determined plurality of interrelationships between the plurality of automation templates and the plurality of engineering objects to generate the master name graph. In one example, the processing unit is configured to generate a plurality of knowledge graph triples based on the determined plurality of interrelationships between the plurality of automation templates and the plurality of engineering objects. The processing unit is further configured to add the generated plurality of knowledge graph triples to the name graph to generate the master name graph.

Thus, the master name graph comprises information associated with a plurality of interrelationships between the plurality of engineering objects, the plurality of automation templates, and the plurality of key performance indicators of the inustrial plant.

In the preferred embodiment, the method further comprises receiving, by the processing unit, a process and instrumentation diagram associated with the industrial plant. The process and instrumentation diagram comprises a pictorial representation of a plurality of processes to be implemented in the industrial plant. In one example, the Process and Instrumentation Diagram, shows how a set of engineering objects is to be connected in the industrial plant. Furthermore, the process and instrumentation diagram comprises information associated with flow directions, safety and control systems, pressure ratings and other key piping and instrument details of the industrial plant.

The processing unit is configured to receive the process and instrumentation diagram via an input device such as a camera or a scanner. In one example, the process and instrumentation diagram is an image file such as JPEG, or a bitmap image. In another example, the received process and instrumentation diagram is a portable document format.

Furthermore, the process and instrumentation diagram comprises information associated with interconnection between the set of engineering objects in the indsutrial plant. In yet another example, the process and instrumentation diagram comprises information associated with one or more sensors which are used in the indsutrial plant. Examples of the one or more sensors includes but is not limited to a temperature sensor, a pressure sensor, and a vibration sensor.

In the preferred embodiment, the method further comprises applying, by the processing unit, an image processing algorithm on the received process and instrumentation diagram to determine the plurality of tiles in the process and instrumentation diagram. In one example, the image processing algorithm is at least one of a pattern recognition algorithm, an object detection algorithm or a semantics extraction algorithm. The image processing algorithm uses an artificial intelligence based model. In one example, the artificial intelligence based model is trained by application of a supervised learning algorithm on a training set comprising a plurality of labelled process and instrumentation diagrams. Examples of the image processing algorithm includes but is not limited to a single shot detector algorithm, a spatial pyramid pooling algorithm, a you look only once algorithm, and a histogram of oriented gradients algorithm.

In the preferred embodiment, the method comprises determining, by the processing unit, the plurality of tiles in the process and instrumentation diagram. The plurality of tiles comprises the plurality of symbols in the process and instrumentation diagram. The plurality of symbols in the process and instrumentation diagram includes a first set of symbols which are indicative of a plurality of components of the engineering project. The plurality of components include one or more engineering objects and one or more connection lines which define interconnections between the one or more engineering objects. The plurality of symbols further comprises a second set of symbols which are indicative of flow directions, safety and control systems, pressure ratings and other key piping and instrument details of the engineering project. In one example, each of the plurality of tiles represent one or more engineering objects such as motors, valves and pipes in the engineering project.

In the preferred embodiment, the method further comprises generating, by the processing unit, a plurality of modules based on an analysis of the plurality of tiles. Each module of the plurality of modules comprises information associated with at least one process of the plurality of processes in the process and instrumentation diagram. Examples of the plurality of modules include, but is not limited a sweetner module, a recipe mixing module, and a flavor module. In one example, the process and instrumentation diagram comprises descriptions and labels associated with the plurality of modules. In such a case, the processing unit is configured to identify each module of the plurality of modules based on an analysis of the process and instrumentation diagram.

In the preferred embodiment, the method further comprises determining, by the processing unit, the set of processes based on an analysis of the plurality of modules. In one example, the process and instrumentation diagram comprises information associated with each process in the plurality of processes in the engineering project. In such a case, the processing unit is configured to combine the two or more modules based on an analysis of the information associated with each process in the plurality of processes.

The method further comprises analyzing, by the processing unit, the master name graph to determine a set of engineering objects associated with the determined set of processes. The processing unit is configured to apply at least one of a search algorithm or a traversal algorithm, and a comparison algorithm to analyze the master name graph to determine the set of engineering objects. The set of engineering objects are associated with the engineering project. In another example, the processing unit is configured to determine a plurality of interconnections between the set of processes by an analysis of the process and instrumentation diagram.

The method further comprises searching, by the processing unit, the master name graph based on the set of engineering objects, to determine a set of name graph segments which are associated with the set of engineering objects in the engineering project. The set of name graph segments comprises information associated a set of interrelationships between one or more properties of the set of engineering objects and a set of key performance indicators of the industrial plant. The one or more properties of the set of engineering objects comprises information associated with one or more variants associated with the set of engineering objects. The one or more properties of the set of engineering objects further comprises information associated with one or more programming blocks used to control the set of engineering objects. The one or more properties of the set of engineering objects further comprises information associated with interconnection betweent the set of engineering objects. The one or more properties of the set of engineering objects further comprises information associated with purchase cost associated with each of the set of engineering objects.

The method further comprises receiving by the processing unit, a user request to generate an engineering project based on the process and instrumentation diagram. The user request comprises information associated with a plurality of desired values for a set of key performance indicators of the industrial plant. In one example, the user request comprises a request to maximize at least one key performance indicator of the industrial plant, while maintaining other key performance indicators of the set of key performance indicators of the industrial plant at acceptable levels. In one example, the engineering project when executed by a controller device, causes the controller device to control the set of engineering objects to perform the set of processes such that the set of key performance indicators are achieved by the industrial plant.

The method further comprises applying, by the processing unit, an optimizing algorithm on the master name graph based on the set of engineering objects and further based on the plurality of desired values for the set of key performance indicators. Examples of the optimizing algorithm comprises Genetic Algorithms (GA), Particle Swarm Optimization Algorithms (PSO), Ant Colony Optimization Algorithms (ACO), Greedy Algorithms, Reinforcement Learning Algorithms (RL), and Metaheuristic Algorithms.

The optimizing algorithm is configured to search the set of name graph segments of the master name graph segment for one or more nodes which comprises information associated with the plurality of desired values of the set of key performance indicators of the industrial plant. In one example, the optimizing algorithm is configured to search the set of name graph segments which identify one of more nodes which comprises information associated with a maximized value of a first key performance indicator of the industrial plant while maintaining an optimum value for a second key performance indicator of the industrial plant simultaneously.

The method further comprises determining, by the processing unit, a set of automation templates associated with the determined one or more nodes of the master name graph. The set of automation templates are determined from the plurality of automation templates by analyzing the master name graph. The set of automation templates comprises information associated with a set of variants, a set of connection schemas, a set of programming blocks, and a set of configuration data items to configure the set of engineering objects. The set of engineering objects may be configured based on the set of automation templates such that the set of engineering objects operate to achieve the plurality of desired values for the set of key performance indicators of the industrial plant.

In one example, the optimization algorithm comprises a maximizing function configured to determine the one or more nodes such that the one or more nodes comprises configuration information required to cause the set of engineering objects to maximize at least one key performance of the industrial plant.

The method further comprises outputting, by the processing unit, the determined set of automation templates to a user. The set of automation templates are output to the user via a human machine interface or a computer or one or more output devices. It is noted that the set of automation templates comprises information indicative of the set of variants, the set of connection schemas, the set of programming blocks, and the set of configuration data items to configure the set of engineering object to achieve the set of key performance indicators of the industrial plant. Thus, the output set of automation templates are one or more recommendations to the user to generate an engineering project based on the process and instrumentation diagram and the plurality of desired values of the set of key performance indicators.

In one example, the determined set of automation templates comprises an efficiency template, a diagnostic template, and a maintenance template. The efficiency template comprises configuration information required to configure the set of engineering objects to optimize an efficiency related key performance indicator of the industrial plant. Examples of the efficiency related key performance indicators include but is not limited to an energy consumption parameter of the industrial plant. The diagnostic template comprises configuration information required to configure the set of engineering objects to optimize an diagnostics related key performance indicator of the industrial plant. Examples of the diagnostic related key performance indicators include but is not limited to a wear and tear associated parameter of the industrial plant. The maintenance template comprises configuration information required to configure the set of engineering objects to optimize an maintenance related key performance indicator of the industrial plant. Examples of the maintenance related key performance indicators include but is not limited to a maintenance cost of the industrial plant.

The set of automation templates further comprsies a template for a user interface for the set of engineering objects. The template comprises one or more graphical buttons which can be used by a user to control the set of engineering objects. The processing unit is configured to generate the user interface based on the template in the set of automation template.

The set of automation templates further comprises a code template comprising the set of programming blocks, which when executed by the controller device, causes the set of engineering objects to operate to achieve a specific objective in the industrial plant.

The method further comprises generating, by the processing unit, an engineering project based on the set of automation templates. In one example, the engineering project is generated by concatenating the set of automation templates based on one or more defined rules. The one or more defined rules are received from a user via a input device. In another example, the one or more defined rules are received from a database. In yet another example, the engineering project is generated by application of a artificial intelligence model on the set of automation templates. The artificial intelligence model is trained by application of an unsupervised learning algorithm on the plurality of engineering projects.

In other words, the generated engineering project comprises information about connection schemas, hardware and software configurations, list of variants, and programming code required to implement the set of processes in the industrial plant, by use of the set of engineering objects.

The generated engineering project comprises information associated with configuration information required to configure the set of engineering objects to operate and achieve a specific objective in the industrial plant. The configuration information further comprises information to configure the set of engineering object to operate to achieve the plurality of desired values of the set of key performance indicators of the industrial plant.

In another example, the method further comprises receiving, by the processing unit, a first user input and a second user input from a user. The first user input comprises a user request to select one or more automation templates from the set of automation templates. The second user input comprises a user request to combine the determined one or more automation templates in a user specified manner. The processing unit is configured to combine the selected one or more automation templates based on the user specified manner to generate the engineering project.

In one example, the method comprises extracting, by the processing unit, the set of programming blocks associated with the set of engineering objects, from the determined set of automation templates. The method further comprises generating, by the processing unit, an engineering program for the engineering project from the extracted set of programming blocks. In one example, the processing unit is configured to combine the extracted set of programming blocks to generate an engineering program comprising sourcecode to control the one or more engineering objects in the engineering projects.

The object of the present invention is also achieved by an engineering system for automatic configuration of engineering objects. The engineering system comprises one or more processor(s) and a memory coupled to the processor. The memory comprises an automation module stored in the form of machine-readable instructions executable by the processor. The automation module is configured for performing the method as described above.

The object of the present invention is also achieved by an industrial environment. The industrial environment comprising an engineering system, a industrial plant comprising one or more physical components and one or more client devices communicatively coupled to the engineering system and the industrial plant. The engineering system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of automatic generation of an engineering project based on a process and instrumentation diagram, according to an embodiment of the present invention;
- FIG 2: is a block diagram of an engineering system, such as those shown in FIG. 1, in which an embodiment of the present invention can be implemented;
- FIG 3: is a block diagram of an automation module, such as those shown in FIG 2, in which an embodiment of the present invention can be implemented;
- FIG 4A-E: is a process flowchart illustrating an exemplary method of automatically generating an engineering project based on a process and instrumentation diagram, according to an embodiment of the present invention;
- FIG 5: is a flowchart representation of an exemplary method of generating a plurality of automation templates, according to an embodiment of the present invention;
- FIG 6: is a schematic representation of an exemplary process of generating a plurality of name graph segments from a name graph, according to an embodiment of the present invention; and
- FIG 7: is a schematic representation of an exemplary process of determining a plurality of processes in a process and instrumentation diagram, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

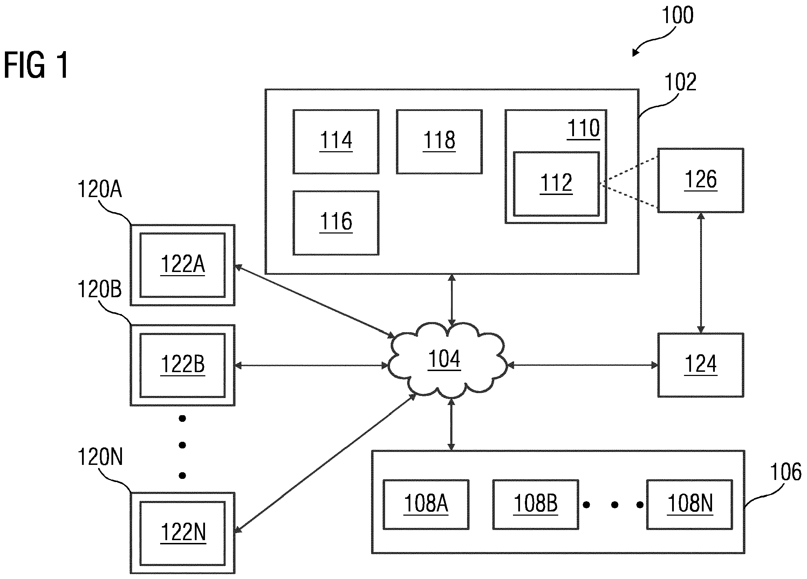

FIG 1 is a block diagram of an industrial environment 100 capable of automatic generation of an engineering project for an indsutrial plant 106 based on a process and instrumentation diagram, according to an embodiment of the present invention. In FIG 1, the industrial environment 100 includes an engineering system 102, the industrial plant 106 and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to a industrial plant via the network 104 (such as Local Area Network (LAN), Wide Area Network (WAN), Wi-Fi, Internet, any short range or wide range communication). The engineering system 102 is also connected to the one or more client devices 120A-N via the network 104.

The industrial plant 106 comprises a set of engineering objects 108A-N. Examples of the set of engineering objects 108A-N may include, for example, a programmable logic controller, one or more field devices, or any other automation devices. Examples of the one or more field devices includes but is not limited to, motors, rotors, mixers, furnaces, heaters, refrigerators, control valves, pumps, and actuators. Examples of the industrial plant 106 includes but is not limited to a power plant, a manufacturing plant, and a water treatment plant.

The set of engineering objects 108A-N are operated by execution of a plurality of programming blocks in a controller device of the industrial plant 106. The controller device is configured to execute the plurality of programming blocks and to control the set of engineering objects 108A-N to achieve a specific objective in the industrial plant 106. In one example, the controller device is a programmable logic controller or a cloud based computing platform.

Each engineering object of the set of engineering objects 108A-N has a plurality of properties which are described in a plurality of documents such as connection schemas, bill of materials, and product manuals. The plurality of properties includes but is not limited to information associated with compatibility of each engineering objects with other engineering objects of the set of engineering objects 108A-N, temperature rating, pressure rating, a function in the indsutrial plant 106, configuration settings associated with the set of engineering objects 108A-N and residual life of the set of engineering objects 108A-N. The plurality of documents comprises process related documents like process operation description document, process flowchart, and process control philosophy, process and instrumentation diagrams, and non-process documents such as bill of materials, brochures, statement of procedure documents, and product manuals. Furthermore, the plurality of documents comprises information associated with a plurality of dependencies of each property of the plurality of properties with each other. The plurality of documents comprises paper based documents as well as electronic documents.

In one example, the plurality of documents comprises information associated with a plurality of key performance indicators of the industrial plant 106. The plurality of key performance indicators are measured by a plurality of field sensors from the set of engineering objects 108A-N.

The engineering system 102 is connected to the set of engineering objects 108A-N in the industrial plant 106 via the network 104. The set of engineering objects 108A-N may be connected to each other or several other components (not shown in FIG 1) via physical connections. The physical connections may be through wiring between the set of engineering objects 108A-N. Alternatively, the set of engineering objects 108A-N is connected via non-physical connections (such as Internet of Things (IOT)) and 5G networks. Although, FIG 1 illustrates the engineering system 102 connected to one industrial plant 106, one skilled in the art can envision that the engineering system 102 can be connected to several industrial plants located at different geographical locations via the network 104.

The one or more client devices 120A-N may be a desktop computer, laptop computer, tablet, smart phone and the like. Each of the one or more client devices 120A-N is provided with an engineering tool 122A-N for generating and/or editing the plurality of engineering projects. For example, the one or more client devices 120A-N can access the engineering system 102 for automatically generating one or more engineering projects. The one or more client devices 120A-N can access cloud applications (such as providing performance visualization of the set of engineering objects 108A-N via a web browser). Throughout the specification, the terms "client device" and "user device" are used interchangeably.

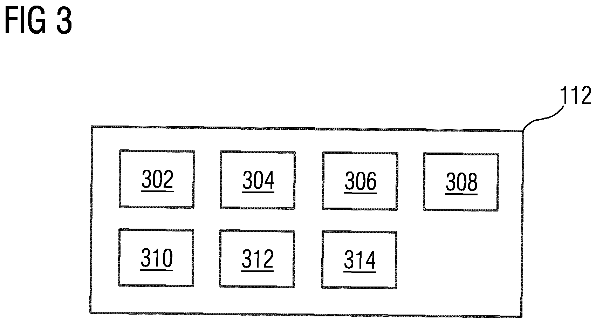

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing the industrial plant 106 comprising the set of engineering objects 108AN. The engineering system 102 may comprise a platform 110 (such as a cloud computing platform), an automation module 112, a server 114 including hardware resources and an operating system (OS), a network interface 116 and a database 118. The network interface 116 enables communication between the engineering system 102, the industrial plant, and the one or more client device(s) 120A-N. The interface (such as cloud interface)(not shown in FIG 1) may allow the engineers at the one or more client device(s) 120A-N to access the one or more engineering projects stored at the engineering system 102 and perform one or more actions on the one or more engineering projects as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. The platform 110 may further comprise an automation module 112 configured for generating ethe one or more engineering projects. The automation module 112 further comprises a knowledge repository 126 comprising at least one name graph. Details of the automation module 112 is explained in FIG. 3.

The industrial environment 100 further comprises a project repository 124 comprising information associated with a plurality of engineering projects. The plurality of engineering projects comprises information about a plurality of engineering objects configured to implement a plurality of industrial processes in the industrial plant 106. Examples of the plurality of engineering objects may include, for example, a programmable logic controller, one or more field devices, or any other automation devices. Examples of the one or more field devices includes but is not limited to, motors, rotors, mixers, furnaces, heaters, refrigerators, control valves, pumps, and actuators. Examples of the plurality of industrial processes include, but is not limited to a heating process, a cooling process and a melting process. In one example, the project repository 124 is a database server which is connected to the engineering system 102 via the network 104.

The plurality of engineering projects comprises engineering projects associated with a plurality of domains. Examples of the plurality of domains includes, but is not limited to a chemical domain, a mechanical domain, a manufacturing domain, and an energy domain. Furthermore, each engineering project of the plurality of engineering projects comprises information associated with a plurality of variants of the plurality of engineering objects. Each variant of the plurality of variants differ from each other in voltage rating, power rating, year of manufacturing, vibration resistance, and water resistance.

Each engineering project of the plurality of engineering projects comprises at least a plurality of programming blocks, a process and instrumentation diagram and a control philosophy which comprise configuration information associated with the plurality of engineering objects. The configuration information comprises information indicative of a manner in which the plurality of engineering objects can be connected and operated to achieve a specific objective in the industrial plant 106. The specific objective is associated with a plurality of key performance indicators of the industrial plant 106. Example of the plurality of key performance indicators include but is not limited to an energy consumption of the industrial plant 106, a water usage of the industrial plant 106, a turnover time of the industrial plant 106 and a operation cost of the industrial plant 106. Each engineering project of the plurality of engineering project is configured to cause the plurality of engineering object to function and achieve a specific combination of key performance indicators of the plurality of key performance indicators. In one example, each engineering project of the plurality of engineering projects comprises a plurality of documents which contain information about the manner in which the plurality of engineering objects are connected and operated to achieve the specific objective in the industrial plant 106.

The plurality of documents comprises information about a plurality of properties of the plurality of engineering objects. Examples of the plurality of documents include but is not limited to a connection schema, a bill of materials, and a product manual associated with the plurality of engineering objects. The plurality of properties includes but is not limited to information associated with compatibility of each engineering objects with other engineering objects of the plurality of engineering objects. Furthermore, the plurality of properties comprises a temperature rating, a pressure rating, and a function of each engineering object in the industrial plant 106. The plurality of properties furtehr comprises configuration settings associated with the plurality of engineering objects 108A-N and residual life of the plurality of engineering objects 108A-N. The plurality of documents comprises process related documents like process operation description document, process flowchart, and process control philosophy, process and instrumentation diagrams, and non-process documents such as bill of materials, brochures, statement of procedure documents, and product manuals. Furthermore, the plurality of documents comprises information associated with a plurality of dependencies of each property of the plurality of properties with each other. The plurality of documents comprises paper based documents as well as electronic documents.

Furthermore, each engineering project of the plurality of engineering projects comprises information associated with a plurality of variants of the plurality of engineering objects. Each variant of the plurality of variants differ from each other in voltage rating, power rating, year of manufacturing, vibration resistance, and water resistance. Furthermore, one or more values of the plurality of key performance indicators of the industrial plant 106 are depedent on a variant of the plurality of engineering objects used in the industrial plant 106.

It is noted that each engineering project of the plurality of engineering projects comprises at least one process and instrumentation diagram and the plurality of programming blocks. The process and instrumentation diagram comprises information associated with interconnection between the plurality of engineering objects in each engineering project of the plurality of engineering projects.

The plurality of engineering projects further comprises a plurality of programming blocks. The plurality of programming blocks comprises programming code which is executed by a controller device in the industrial plant 106 to control operations of the plurality of engineering objects. In other words, the plurality of engineering objects are connected in the industrial plant 106 based on the process and instrumentation diagram. The controller device, such as a rogrammable logic controller, is configured to execute the plurality of programming blocks to control the plurality of engineering objects to achieve a specific objective in the industrial plant 106.

Thus, in other words, each engineering project of the plurality of engineering projects comprises configuration information to configure the plurality of engineering objects to operate and achieve a specific value for each of the plurality of key performance indicators of the industrial plant. Information associated with the plurality of key performance indicators are stored as a textual document in each of the plurality of engineering projects.

In one example, the plurality of engineering projects comprise information about the plurality of programming blocks associated with the plurality of engineering objects. The plurality of engineering projects further comprises information associated with an interdependency between the plurality of programming blocks and the plurality of key performance indicators of the industrial plant 106. In one example, each programming block of the plurality of programming block is linked to a specific value of at least one key performance indicator of the plurality of key performance indicators of the industrial plant.

The database 118 stores the information relating to the industrial plant 106 and the one or more client device(s) 120AN. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store engineering project files, engineering programs, object behavior model, parameter values associated with the set of engineering objects 108A-N, test results, simulation results, status messages, one or more simulation instances, graphical programs, program logics, program logic patterns, product manuals of the set of engineering objects 108A-N and engineering object properties, one or more engineering object blocks, relationship information between the engineering objects, requirements, program update messages and the like.

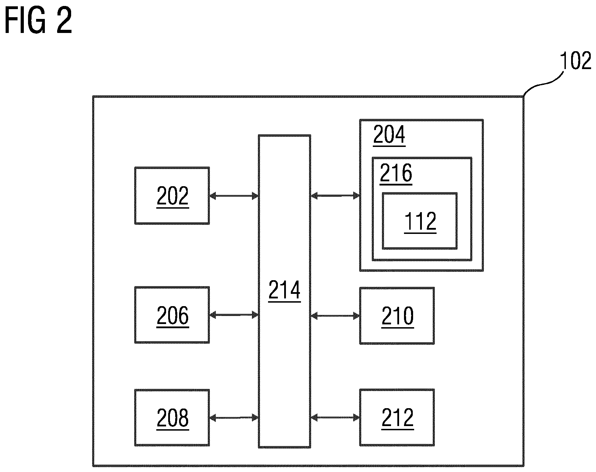

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the automation module 112 stored in the form of machine-readable instructions on any of the above-mentioned storage media and may be in communication with and executed by the processor(s) 202.

When executed by the processing unit 202, the automation module 112 causes the processing unit 202 to receive the plurality of engineering projects from the project repository 124.

The plurality of engineering projects comprises information associated with the plurality of engineering objects. The plurality of engineering objects are configured to implement a plurality of industrial processes in the industrial plant 106. Examples of the plurality of industrial processes include, but is not limited to a heating process, a cooling process and a melting process.

The automation module 112 further causes the processing unit 202 to analyze the plurality of engineering projects based on an application of a natural language processing algorithm on each engineering project of the plurality of engineering projects. The natural language processing algorithm is configured to analyze each process and instrumentation diagram and each programming block in each engineering project of the plurality of engineering projects. Furthermore, the natural language processing algorithm is configured to analyze one or more connection schemas, maintenance logs, and one or more product manials of the plurality of engineering objects in the plurality of engineering projects. In one example, the natural language processing algorithm is at least one of a named entity recognition algorithm, a text summarization algorithm, and a tokenization algorithm.

The automation module 112 further causes the processing unit 202 to extract a plurality of data items from the analyzed plurality of engineering projects, based on the analysis. The plurality of data items comprises information associated with each engineering object of the plurality of engineering objects in each engineering project of the plurality of engineering projects. Examples of the information associated with each engineering object of the plurality of engineering objects comprises a name, a voltage rating, a power rating, a purpose, a function, a specification, a manufacturer details, and a maintenance details associated with the plurality of engineering objects. For example, in a case where the plurality of engineering projects comprises a document which comprises a first statement "voltage rating of motor is 300 volts" and a second statement "a first object is a motor", then the extracted plurality of data items comprises a first data item "first object", a second data item "motor", a third data item "300 volts" and a fourth data item "voltage rating". In one example, the plurality of data items comprise a plurality of tokens generated by application of a tokenization algorithm on the plurality of documents of the plurality of engineering projects.

The automation module 112 further causes the processing unit 202 to apply a dependency parsing algorithm on the plurality of data items to analyze a syntactic structure of interdependencies between one or more data items of the plurality of data items. Furthermore, the dependency parsing algorithm is applied on one or more textual data comprised within the plurality of data items. The dependency parsing algorithm is configured to identify a plurality of grammatical relationships between two or more data items of the plurality of data items based on the application of the dependency parsing algorithm. Each data item of the plurality of data items is indicative of information about at least one engineering object of the plurality of engineering objects of the plurality of engineering projects. Thus, the plurality of grammatical relationships between the plurality of data items is indicative of a plurality of dependencies between the plurality of data items and two or more engineering objects of the plurality of engineering objects of the plurality of engineering projects.

In one example, the processing unit is configured to filter the plurality of data items with one or more named entity recognition (NER) algorithms to identify mentions of each of the plurality of engineering objects in the plurality of data items.

The automation module 112 further causes the processing unit 202 to analyze the identified mentions of the plurality of engineering objects. The processing unit 202 is further configured to assign a plurality of semantic roles to the identified mentions of the plurality of engineering objects based on the analysis of the plurality of data items. The plurality of semantic roles are assigned by application of a semantic role labelling algorithm on the identified mentioned of the plurality of engineering objects. The semantic role labelling algorithm is configured to assign semantic roles to the identified mentions of the plurality of engineering objects based on the analysis. The semantic roles of each component of the plurality of engineering objects is indicative of a relationship of each engineering object with other engineering objects of the plurality of engineering objects. Examples of the semantic role labelling algorithms include, but is not limited to AllenNLP Algorithm or PropBank project algorithm.

The automation module 112 further causes the processing unit 202 to analyze the plurality of grammatic relationships and the plurality of assigned semantic roles to determine a plurality of interconnections between the plurality of engineering objects. The plurality of interconnections between the identified mentions of the plurality of engineering objects is indicative of a plurality of interdependencies between the plurality of engineering objects.

The processing unit 202 is configured to generate a plurality of dependency trees based on the determined plurality of grammatical relationships, the determined plurality of semantic roles, and the plurality of interconnections between one or more engineering objects of the plurality of engineering objects. The plurality of dependency trees further comprises information associated with the plurality of interrelationships between one or more data items of the plurality of data items and the one or more engineering objects of the plurality of engineering objects. Each dependency tree of the plurality of dependency trees is representative of a plurality of interdependencies between the plurality of data items and the plurality of engineering objects extracted from the plurality of engineering projects.

In other words, the automation module 112 further causes the processing unit 202 to determine the plurality of interrelationships between the plurality of data items and the plurality of engineering objects. The automation module 112 further causes the processing unit 202 to generate the plurality of dependency trees based on the plurality of interrelationships.

It is noted that the plurality of engineering project comprises information associated with interdependency between the plurality of engineering objects, the plurality of programming blocks and the plurality of key performance indicators of the industrial plant 106. Thus, the plurality of dependency trees comprises information associated with a plurality of interrelationships between the plurality of programming blocks and the plurality of key performance indicators of the industrial plant 106.

In one example, the plurality of engineering projects comprises a document comprising a first statement "voltage rating of motor is 300 volts" and a second statement "a first object is a motor" . In such a case, the processing unit 202 determines a first interrelationship that the first data item (voltage rating) is linked to the second data item (300 volts). Furthermore, the processing unit 202 determines a second interrelationship that the second data item (motor) is linked to the third data item (300 volts). In other words, the processing unit 202 determines information associated with the plurality of interrelationships between one or more data items of the plurality of data items and one or more engineering objects of the plurality of engineering objects. Thus, the plurality of dependency trees comprises information associated with the first interrelationships and the second interrelationships associated with the first, the second, and the third data items.

The automation module 112 further causes the processing unit 202 to generate a name graph based on the plurality of dependency trees. In one example, the processing unit 202 is configured to concatenate the plurality of dependency trees to generate the name graph based on a set of rules. In one example, the set of rules are user defined. In another example, the processing unit 202 is configured to combine the plurality of dependency trees by application of a mathematical operation such as a union operation or an intersection operation on the plurality of dependency trees. The processing unit 202 is configured to merge the plurality of dependency trees based on an analysis of the assigned plurality of semantic roles.

The name graph comprises a plurality of nodes. Each node of the plurality of nodes comprises information associated with a specific engineering object of the plurality of engineering objects of the plurality of engineering projects. Thus, the master name graph comprises information associated with the plurality of dependencies between the plurality of data items and the plurality of engineering objects.

For example, the plurality of nodes comprises a first node comprising information about the first data item "first object", a second node comprising information about the second data item "motor", a third node comprising information about the third data item "300 volts" and a fourth node comprising information about the fourth data item "voltage rating". Furthermore, the name graph comprises a plurality of links between the plurality of nodes to represent the plurality of interrelationships between the plurality of data items.

The plurality of nodes further comprises information associated with the plurality of programming blocks associated with each engineering object of the plurality of engineering objects. Examples of the information associated with the plurality of programming blocks include but is not limited to names of functions, data flow in each of the set of programming blocks, classes in set of programming blocks, variable names, and data types in the plurality of programming blocks. Information comprised in the plurality of nodes further comprises information associated with hierarchical dependencies between classes, functions, and subroutines within the plurality of programming blocks. The name graph further comprises information associated with interrelationships between each of the plurality of programming blocks and the plurality of key performance indicators of the industrial plant 202.

Thus the name graph comprises information associated with a plurality of dependencies between each of the plurality of engineering objects, and the plurality of key performance indicators of the industrial plant 202, and the plurality of programming blocks in the plurality of engineering projects.

The generated name graph has a plurality of dimensions. Each dimension of the plurality of dimensions represents a specific aspect of each engineering project of the plurality of engineering projects. In one example, a first dimension of the plurality of dimensions comprises one or more nodes associated with information associated with a programming code in the plurality of programming blocks of each of the plurality of engineering projects. The information associated with the programming code comprises information associated with a programming language, list of hierarchies and dependencies, classes, variables, and code snippets in the programming code. Furthermore, a second dimension of the plurality of dimensions comprises one or more nodes comprising information associated with a user interface in each engineering project of the plurality of engineering projects. Furthermore, a third dimension comprises information about the one or more industrial contexts of each engineering object of the plurality of engineering objects. The third dimension further comprises information associated with the plurality of variants of each engineering object of the plurality of engineering objects.

Advantageously, the name graph comprises information associated with interconnections, the plurality of variants, hardware configurations, software configurations, engineering programs, and a plurality of functionalities associated with each engineering object of the plurality of engineering objects in the plurality of engineering projects. Furthermore, the name graph comprises information associated with interconnections and dependencies between the plurality of engineering objects and the plurality of variants, the hardware configurations, the software configurations, the engineering programs, the plurality of industrial contexts, the plurality of domains, and the plurality of functionalities of the plurality of engineering objects. Thus, advantageously, the processing unit 202 is configured to extract knowledge from the plurality of engineering objects of the plurality of engineering project. Thus, a huge amount of manual labour and time used to extract knowledge is eliminated.

In one example, the name graph comprises information associated with a specific engineering object, which is a motor. In such a case, the name graph comprises a first set of nodes comprising information associated with a plurality of variants of the motor. Furthermore, a second set of nodes in the name graph comprises information associated with a process and instrumentation diagram icon/template associated with the motor. Furthermore, a third set of nodes in the master name graph comprises information associated with a usage template of the motor. The usage template indicates information associated with the motor such as a voltage rating, a power rating, a current rating, a speed, and an input-output port of the motor.

The automation module 112 further causes the processing unit 202 to analyze the name graph to determine a plurality of name graph segments in the name graph. Each of the plurality of name graph segments comprises one or more nodes comprising information about a specific process in a plurality of processes implemented in the plurality of engineering projects. Examples of the specific process comprises but is not limited to a heating process, a cooling process, a transporting process, a chemical process and a mechanical process. In such a case, the plurality of name graph segments are determined based on an analysis of information in the one or more nodes. In such a case, each name graph segment of the plurality of name graph segments comprises information associated with a specific process of the plurality of processes implemented in the plurality of engineering projects.

Each process of the plurality of processes is performed by a combination of two or more engineering objects in the plurality of engineering objects. For example, a process such as a transportation process is performed by a combination of engineering objects comprising a first engineering object such as a conveyor belt in conjunction with a second engineering object such as a autonomous guided vehicle, and a third engineering object such as a pick and place robot. In such a case, each node in a name graph segment associated with the transportation process comprises information associated with at least one of the first, the second, and the third engineering object.

Each node of the plurality of name graph segments comprises information associated with a specific functionality of a specific engineering object of the combination of the tow or more engineering objects. The specific functionality associated with a specific engineering object includes at least one function of a plurality of functions of the specific engineering object. In one example, the specific engineering object is a motor which is used for the plurality of functionalities such as transportation, compression of air, drilling of metals, and milling of powder. In a case where the specific engineering object is used for drilling of metals, then the specific functionality of the specific engineering object is to drill metals.

In another example, the plurality of name graph segments are determined based on an analysis of an arrangement of the plurality of nodes of the master name graph. For example, the processing unit is configured to receive from a database, a plurality of name graph structures which are stored in the database. Each of the plurality of name graph structures has a structure in accordance with which a set of nodes of the name graph structure are arranged. The plurality of name graph structures are stored in the database 114 or the knowledge repository 126. In one example, the plurality of name graph structures are received from a user.

Each name graph structure of the plurality of name graph structures comprises a knowledge graph which indicates a specific process of a plurality of industrial processes. The knowledge graph associated with the specific process comprises information associated with one or more engineering objects which are configured to perform the specific process in the industrial plant 106. In such a case, the processing unit 202 is configured to compare a structure of a portion of the name graph with a structure of each name graph structure of the plurality of name graph structures. The structure of the portion of the name graph is indicative of an arrangement of two or more nodes in the portion of the name graph and interconnections between the two or more nodes. Thus, the processing unit 202 is configured to determine the specific process by matching the structure with at least one of the plurality of name graph structures.

In another example, the plurality of name graph segments are determined by application of a neural network on the name graph. The neural network is trained on a training data set comprising information associated with a plurality of industrial processes and the plurality of name graph structures.

The automation module 112 further causes the processing unit 202 to analyze the plurality of name graph segments to determine a logic structure of each name graph segment of the plurality of name graph segments. A logic structure of a name graph segment is indicative of an arrangement of two or more nodes in the name graph segment. In one example, the processing unit 202 is configured to determine the logic structure of each name graph segment of the plurality of name graph segment by application of a pattern recognition algorithm on a set of nodes in each name graph segment of the plurality of name graph segments. The processing unit 202 is further configured to compare the logic structure of each name graph segment of the plurality of name graph segments with each other. The logic structure of each name graph segment of the plurality of name graph segments is compared with other name graph segments by application of a graph similarity algorithm on the plurality of name graph segments. Examples of the plurality of name graph segments include but is not limited to Graph Edit Distance (GED) algorithm, subgraph matching algorithms, and a spectral graph similarity algorithm.

The automation module 112 further causes the processing unit 202 to determine two or more name graph segments from the plurality of name graph segments based on the comparison, such that the determined two or more name graph segments have similar logic structures. In one example, the two or more name graph segments are determined by the processing unit 202 based on a determination that the arrangement of the two or more nodes in each name graph segment of the two or more name graph segments, are similar to each other. In one example, the processing unit 202 is configured to tag the two or more name graph segments together to generate a group of the two or more name graph segments.

The automation module 112 further causes the processing unit 202 to determine one or more name graph segments which has a logic structure which is repeated throughout the name graph. In one example, the one or more name graph segments are determined by application of a machine learning algorithm on the name graph. The machine learning algorithm is one of a supervised learning algorithm and an unsupervised learning algorithm. In one example, the machine learning algorithm is a pattern recognition algorithm which is configured to determine a plurality of patterns in an arrangement of the plurality of nodes in the name graph. In such a case, the machine learning algorithm is configured to determine that one or more patterns from the plurality of patterns, are repeated throughout the name graph. The set of name graph segments are determined by the processing unit 202 based on an analysis of the one or more patterns which are determined to be repeated throughout the name graph.

The automation module 112 further causes the processing unit 202 to classify the plurality of name graph segments into a plurality of groups such that each group of the plurality of groups is representative of a specific industrial process of a plurality of industrial processes associated with the plurality of engineering projects.

The automation module 112 further causes the processing unit 202 to generate a plurality of alternate representations for a set of nodes in each name graph segment of each group of the plurality of groups. In one example, the plurality of alternate representations for the set of nodes in a name graph segment is generated by a plurality of steps. A first step of the plurality of steps comprises rearranging, by the processing unit, one or more nodes in the set of nodes of the name graph segment randomly to generate a new arrangement of the set of nodes in the name graph segment. In one example, the processing unit 202 is configured to generate the new arrangement by application of a randomizing algorithm such as a random node permutation algorithm on the set of nodes in the name graph segment. A second step of the plurality of steps is to validate the new arrangement of the set of nodes by comparing the new arrangement of the set of nodes to a plurality of arrangements of nodes in the name graph. In a case where the new arrangement of the set of nodes is compatible with a portion of the name graph, then the new arrangement of the set of nodes is validated. A third step of the plurality of steps is that in a case where the new arrangement of the set of nodes is validated, then the new arrangement of the set of nodes is added to a context stack. The processing unit 202 is configured to generate at least one alternate representation of the plurality of alternate representations of the set of nodes based on the new arrangement of the context stack. In other words, the processing unit 202 is configured to generate the plurality of alternate representations of the set of nodes of each name graph segments of the plurality of name graph segments.

The context stack is a memory structure in which the plurality of alternate representations of the set of nodes which corresponds to each name graph segment are populated by the processing unit 202. Furthermore, the processing unit 202 is configured to generate one or more name graph segments from each alternate representation of the generated plurality of alternate representations of the set of nodes in the plurality of name graph segments. The automation module 112 further causes the processing unit 202 to append the generated one or more name graph segments into the name graph. The plurality of alternate representations of the set of nodes is indicative of knowledge which is newly generated from existing knowledge in the name graph and the plurality of name graph segments. Thus, the newly generated one or more name graph segment comprises knowledge which is absent in the plurality of engineering projects. Advantageously, by appending the generated one or more name graph segments into the name graph, the processing unit 202 is generating knowledge which is non existent in the plurality of engineering projects. Thus, the processing unit 202 is configured to generate insights, knowledge and connections which are new compared to knowledge already existing in the plurality of engineering projects.

The automation module 112 further causes the processing unit 202 to iteratively execute a plurality of iterative steps to generate a plurality of automation templates from the name graph. In a first step of the plurality of iterative steps, the processing unit 202 is configured to select a first name graph segment from the plurality of name graph segments.

In a second step, the processing unit 202 is configured to analyze the first name graph segment by application of a natural language processing algorithm on the first name graph segment. Information about a first process associated with the first name graph segment is indicated in at least one node of a set of nodes of the first name graph segment. Thus, the processing unit 202 is configured to determine the first process associated with the first name graph segment based on the analysis.

In a third step of the plurality of iterative steps, the processing unit is configured to analyze each name graph segment in the plurality of groups of name graph segments to determine a second process associated with each name graph segment. Furthermore, the processing unit is configured to compare the first process with the second process of each name graph segment of the plurality of name graph segments. The processing unit 202 is further configured to determine, from the plurality of name graph segments, the second process which is similar to the first process, based on the comparison. Similarly, the processing unit 202 is configured to determine a set of processes which are similar to the first process.

In a fourth step of the plurality of iterative steps, a set of name graph segments are determined by the processing unit 202, based on the analysis of the determined set of processes. The determined set of name graph segments of the name graph comprises information associated with at least one process of the set of processes. In other words, the automation module 112 further causes the processing unit 202 to analyze the plurality of groups of name graph segments to determine the set of name graph segments associated with the the first process. The automation module 112 further causes the processing unit 202 to determine one or more engineering objects of the plurality of engineering objects based on an analysis of the determined set of name graph segments. It is noted that the determined set of name graph segments comprises information associated with interrelationship between the one or more engineering objects and the plurality of key performance indicators of the industrial plant 106.

The automation module 112 further causes the processing unit 202 to generate at least one automation template for the first process based on the information in the determined set of name graph segments and information associated with the one or more engineering objects.

The generated at least one automation template is a compilation of configuration information required to configure the one or more engineering object to implement the first process in the industrial plant. Thus, the at least one automation template comprises information associated with interrelationship between the one or more engineering objects and the plurality of key performance indicators of the industrial plant 106.

The at least one automation template comprise information associated with a variant of each engineering object of the one or more engineering object which is capable of implementing the first process. In one example, the at least one automation template comprises information which is indicative of a value of each of the plurality of key performance indicators of the industrial plant 106, when each variant of the one or more engineering objects are used in the industrial plant 106. The at least one automation template further comprises information associated with one or more programming blocks which are configured to cause the one or more engineering object to generate a specific value for each of the set of key performance indicators of the industrial plant 106. The at least one automation template further comprises information associated with the set of name graph segments.

In other words, the at least one automation template comprises information associated with an interrelationship between each of the first process, the one or more engineering objects, and at least one key performance indicator of the plurality of key performance indicators of the industrial plant 106. The at least one automation template further comprises a set of programming blocks of the plurality of programming blocks. A controller device in the industrial plant 106 is configured to execute the set of programming blocks to control the one or more engineering objects such that the industrial plant 106 achieves the at least one key perfomance parameter. In other words, the at least one automation template comprises a configuration information and the set of programming blocks required to control the one or more engineering objects to execute the first process and achieve an optimum value for the at least one key performance indicator of the industrial plant 106.

For example, in a case where the first process is a process to warm water, the at least one automation template comprises a first connection schema, and a first programming block. The first connection schema comprises information to connect the first engineering object and the second engineering objects such that a temperature of water in the industrial plant 106 is maintained below 100 degree Celsius. The first programming block comprises computer code which is executed by a controller device to control the first engineering object and the second engineering objects such that a temperature of water is maintained below 100 degree Celsius

In a case where the at least one automation template is associated with a second process to boil water, then the at least one automation template comprises information about a second connection schema, and a second programming file for the first engineering object and the second engineering object. For example, for the boiling water context, the first engineering object and the second engineering objects are configured such that a temperature of water is increased above 100 degree Celsius.

The automation module 112 further causes the processing unit 202 to execute the plurality of iterative steps iteratively to until a plurality of automation templates are generated for the plurality of engineering objects and the plurality of industrial processes in the plurality of engineering projects. In other words, the automation module 112 further causes the processing unit 202 to generate the plurality of automation templates for the plurality of engineering objects of the plurality of engineering projects. Each automation template of the plurality of automation templates comprise information required to configure and control one or more engineering objects of the plurality of engineering objects to execute a specific industrial process in the industrial plant 106. Furthermore, each automation template of the plurality of automation templates comprise information to configure the one or more engineering objects to operate and achieve a specific value for one or more key performance indicators of the industrial plant 106.

In one example, the processing unit 202 is configured to extract, from the name graph, a plurality of interelationships between the plurality of automation templates and the plurality of name graph segments. It is noted that each of the plurality of automation templates comprises information associated with a specific set of name graph segments of the plurality of name graph segments. Thus the processing unit 202 is configured to generate a mapping between each the plurality of automation templates to a specific name graph segment of the plurality of name graph segments. It is noted that each of the plurality of name graph segments comprises information associated with one or more engineering objects of the plurality of engineering objects. Thus, the processing unit 202 is configured to determine a plurality of interelationships between the plurality of automation templates and the plurality of engineering objects based on the generated mapping. Thus, the processing unit 202 is configured to determine a plurality of interelationships between the plurality of automation templates and the plurality of engineering objects based on the generated mapping.

The automation module 112 further causes the processing unit 202 to generate a master name graph based on an analysis of the name graph, the plurality of engineering objects and the plurality of automation templates. In one example, the master name graph is generated based on the determined plurality of interrelationships between the plurality of automation templates and the plurality of engineering objects. The processing unit 202 is configured to generate the master name graph by adding, to the name graph, information associated with the determined plurality of interrelationships between the plurality of automation templates and the plurality of engineering objects. In one example, the processing unit 202 is configured to generate a plurality of knowledge graph triples based on the determined plurality of interrelationships between the plurality of automation templates and the plurality of engineering objects. The processing unit 202 is further configured to add the generated plurality of knowledge graph triples to the name graph to generate the master name graph.

Thus, the master name graph comprises information associated with a plurality of interrelationships between the plurality of engineering objects, the plurality of automation templates, and the plurality of key performance indicators of the industrial plant 106.

The automation module 112 further causes the processing unit 202 to receive a process and instrumentation diagram associated with the industrial plant 106. The process and instrumentation diagram comprises a pictorial representation of a plurality of processes to be implemented in the industrial plant 106. In one example, the Process and Instrumentation Diagram, shows how a set of engineering objects 108A-N is connected in the industrial plant 106. Furthermore, the process and instrumentation diagram comprises information associated with flow directions, safety and control systems, pressure ratings and other key piping and instrument details of the industrial plant 106.

The processing unit 202 is configured to receive the process and instrumentation diagram via an input device such as a camera or a scanner or the one or more client devices 120A-N. In one example, the process and instrumentation diagram is an image file such as JPEG, or a bitmap image. In another example, the received process and instrumentation diagram is a portable document format.

Furthermore, the process and instrumentation diagram comprises information associated with interconnection between the set of engineering objects 108A-N in the industrial plant 106. In yet another example, the process and instrumentation diagram comprises information associated with one or more sensors which are used in the industrial plant 106. Examples of the one or more sensors includes but is not limited to a temperature sensor, a pressure sensor, and a vibration sensor.

The automation module 112 further causes the processing unit 202 to apply an image processing algorithm on the received process and instrumentation diagram to determine a plurality of tiles in the process and instrumentation diagram. Each tile of the plurality of tiles comprises a constituent unit of the process and instrumentation diagram. For example the plurality of tiles comprises grid blocks based on a plurality of grid lines in the process and instrumentation diagram. In another example, the plurality of tiles comprises instances of one or more repeated pictorial patterns in the process and instrumentation diagrams. In one example, the image processing algorithm is at least one of a pattern recognition algorithm, an object detection algorithm or a semantics extraction algorithm. The image processing algorithm uses an artificial intelligence based model. In one example, the artificial intelligence based model is trained by application of a supervised learning algorithm on a training set comprising a plurality of labelled process and instrumentation diagrams. The plurality of labelled process and instrumentation diagrams are received from the database 114. Examples of the image processing algorithm includes but is not limited to a single shot detector algorithm, a spatial pyramid pooling algorithm, a you look only once algorithm, and a histogram of oriented gradients algorithm.

In one example, each of the plurality of tiles comprises a plurality of symbols in the process and instrumentation diagram. The plurality of symbols in the process and instrumentation diagram includes a first set of symbols which are indicative of a plurality of components which are desired to be in the engineering project. The plurality of symbols further comprises a second set of symbols which are indicative of flow directions, safety and control systems, pressure ratings and other key piping and instrument details of the industrial plant 106. In one example, each of the plurality of tiles represent one or more components, of the industrial plant 106.

The automation module 112 further causes the processing unit 202 to generate a plurality of modules based on an analysis of the plurality of tiles. Each module of the plurality of modules comprises information associated with at least one process of the plurality of processes in the process and instrumentation diagram. Each module of the plurality of modules is indicative of a group of engineering objects which performs a specific function in the industrial plant 106. In one example, a module of the plurality of modules comprises one or more components which are configured to boil water. Thus, the module is a water boiler module. Other examples of the plurality of modules include, but is not limited a sweetner module, a recipe mixing module, and a flavor module. In one example, the process and instrumentation diagram comprises descriptions and labels associated with the plurality of modules. In such a case, the processing unit 202 is configured to identify each module of the plurality of modules based on an analysis of the process and instrumentation diagram.

The automation module 112 further causes the processing unit 202 to determine the set of processes which are to be implemented in the industrial plant 106, based on an analysis of the plurality of modules. Each process of the set of processes is indicative of a specific function of at least one module of the plurality of modules. In one example, the process and instrumentation diagram comprises information associated with two or modules which function together to achieve a common functionality which is to be implemented in the industrial plant 106. In such a case, the processing unit 202 is configured to combine the two or more modules based on an analysis of the information associated with the two or more modules.

The automation module 112 further causes the processing unit 202 to analyze the master name graph to determine the set of engineering objects 108A-N associated with the determined set of processes. The processing unit 202 is configured to apply at least one of a search algorithm or a traversal algorithm, and a comparison algorithm to analyze the master name graph. In one example, the processing unit 202 is configured to compare the set of processes with each process of the plurality of industrial processes mentioned in the master name graph. The processing unit 202 is further configured to determine at least one process which is similar to the set of processs by use of a comparison algorithm. The processing unit 202 is configured to analyze the master name graph to determine one or more nodes, of the master name graph, which comprises information associated with the at least one process. The at least one process is similar to the set of processes in the process and instrumentation diagram. In another example, the processing unit 202 is configured to determine a plurality of interconnections between the set of processes based on an analysis of the process and instrumentation diagram.

The one or more nodes comprises information required to configure the set of engineering objects 108A-N to operate and perform the set of processes in the industrial plant 106. The processing unit is configured to analyze the one or more nodes of the master name graph to determine the set of engineering objects 108A-N.

The automation module 112 further causes the processing unit 202 to search the master name graph based on information associated with the set of engineering objects 108A-N, to determine a set of name graph segments which are associated with the set of engineering objects 108A-N. The set of name graph segments comprises information associated a set of interrelationships between one or more properties of the set of engineering objects 108A-N and a set of key performance indicators of the industrial plant 106. The one or more properties of the set of engineering objects 108A-N comprises information associated with one or more variants associated with the set of engineering objects 108A-N. The one or more properties of the set of engineering objects 108A-N further comprises a relationship between use of each of the one or more variants and set of key performance indicators of the industrial plant 106. The one or more properties of the set of engineering objects 108A-N further comprises information associated with one or more programming blocks used to control the set of engineering objects 108A-N. The one or more properties of the set of engineering objects 108A-N further comprises information associated with interconnection be-tweent the set of engineering objects. The one or more properties of the set of engineering objects 108A-N further comprises information associated with purchase cost associated with each of the set of engineering objects.

The automation module 112 further causes the processing unit 202 to receive a user request to generate an engineering project based on the process and instrumentation diagram. The user request further comprises information associated with a plurality of desired values for a set of key performance indicators of the industrial plant 106. In one example, the user request comprises a request to maximize at least one key performance indicator of the industrial plant 106, while maintaining other key performance indicators of the set of key performance indicators of the industrial plant 106 at acceptable levels. In one example, the engineering project comprises one or more programming blocks, which when executed by a controller device, causes the controller device to control the set of engineering objects 108A-N to perform the set of processes such that the plurality of desired values of the set of key performance indicators are achieved by the industrial plant 106.

The automation module 112 further causes the processing unit 202 to apply an optimizing algorithm on the master name graph based on the set of engineering objects 108A-N and further based on the plurality of desired values for the set of key performance indicators. Examples of the optimizing algorithm comprises Genetic Algorithms (GA), Particle Swarm Optimization Algorithms (PSO), Ant Colony Optimization Algorithms (ACO), Greedy Algorithms, Reinforcement Learning Algorithms (RL), and Metaheuristic Algorithms.

The optimizing algorithm is configured to search the set of name graph segments of the master name graph segment for at least one node which is indicative of the plurality of desired values of the set of key performance indicators of the industrial plant 106. In other words, the at least one node comprises information to configure the set of engineering objects 108A-N to operate and achieve the plurality of desired values of the set of key performance indicators of the industrial plant 106. In one example, the optimizing algorithm is configured to search the set of name graph segments to identify teh at least one node which comprises information associated with a maximized value of a first key performance indicator of the industrial plant 106 while maintaining an optimum value for a second key performance indicator of the industrial plant 106 simultaneously.

The automation module 112 further causes the processing unit 202 to determine a set of automation templates associated with the determined at least one node of the master name graph. The set of automation templates are determined by analyzing the master name graph. The set of automation templates comprises information associated with a set of variants, a set of connection schemas, a set of programming blocks, and a set of configuration data items to configure the set of engineering objects 108A-N. In other words, the set of automation templates comprise configuration information to configured the set of engineering objects 108A-N such that the set of engineering objects 108A-N operate in the industrial plant 106 to achieve the plurality of desired values of the set of key performance indicators of the industrial plant 106.

In one example, the optimization algorithm comprises a maximizing function configured to determine the one or more nodes such that the at least one node comprises configuration information required to cause the set of engineering objects 108A-N to maximize at least one key performance of the industrial plant 106. For example, the maximising function is configured to traverse the master name graph to determine the at least one node which are associated with a maximum value of the at least one key performance of the industrial plant 106.

The automation module 112 further causes the processing unit 202 to output the determined set of automation templates to a user. The set of automation templates are output to the user via a human machine interface or a computer or one or more output devices or the one or more client devices 120A-N. It is noted that the set of automation templates comprises information indicative of the set of variants, the set of connection schemas, the set of programming blocks, and the set of configuration data items to configure the set of engineering object to achieve the set of key performance indicators of the industrial plant 106. Thus, the output set of automation templates are one or more recommendations to the user to generate the engineering project based on the process and instrumentation diagram and the plurality of desired values of the set of key performance indicators.

Advantageously, the user is enabled to easily generate the engineering project which is configured to cause the set of engineering objects 108A-N to operate and achieve the plurality of desired values for the set of key performance indicators of the industrial plant 106.

In one example, the determined set of automation templates comprises an efficiency template, a diagnostic template, and a maintenance template. The efficiency template comprises configuration information required to configure the set of engineering objects 108A-N to optimize an efficiency related key performance indicator of the industrial plant 106. Examples of the efficiency related key performance indicators include but is not limited to an energy consumption parameter of the industrial plant 106. The diagnostic template comprises configuration information required to configure the set of engineering objects to optimize an diagnostics related key performance indicator of the industrial plant 106. Examples of the diagnostic related key performance indicators include but is not limited to a wear and tear associated parameter of the industrial plant 106. The maintenance template comprises configuration information required to configure the set of engineering objects 108A-N to optimize an maintenance related key performance indicator of the industrial plant 106. Examples of the maintenance related key performance indicators include but is not limited to a maintenance cost of the industrial plant 106.

The set of automation templates further comprises a template for a user interface for the set of engineering objects 108AN. The template comprises one or more graphical buttons which can be used by a user to control the set of engineering objects 108A-N. The processing unit 202 is configured to generate the user interface based on the template in the set of automation templates 108A-N.

The automation module 112 further causes the processing unit 202 to generate the engineering project based on the set of automation templates. In one example, the engineering project is generated by concatenating the set of automation templates based on one or more defined rules. The one or more defined rules are received from a user via a input device. In another example, the one or more defined rules are received from a database. In yet another example, the engineering project is generated by application of a artificial intelligence model on the set of automation templates. The artificial intelligence model is trained by application of an unsupervised learning algorithm on the plurality of engineering projects. The generated engineering project comprises the process and instrumentation diagram, information associated with the set of variants, the set of connection schemas, the set of programming blocks required to configure the set of engineering objects 108A-N to achieve the plurality of desired values of the set of key performance indicators of the industrial plant 106.

Advantageously, the user is enabled to generate the engineering project without having to spend time and labour to analyze and understand relationships between a plurality of engineering objects and a plurality of key performance indicators of the industrial plant 106. Furthermore, advantageously, the automation module 112 automatically extracts learnings from the plurality of engineering projects which are stored in a data repository. Furthermore, the automation module 112 is configured to generate more data from the extracted learnings from the plurality of engineering projects.

In one example, the automation module 112 further causes the processing unit 202 to receive a first user input and a second user input from a user. The first user input comprises a user request to select one or more automation templates from the set of automation templates. The second user input comprises a user request to combine the determined one or more automation templates in a user specified manner. The processing unit 202 is configured to combine the selected one or more automation templates based on the user specified manner to generate the engineering project.

In one example, the automation module 112 further causes the processing unit 202 to extract the set of programming blocks associated with the set of engineering objects 108A-N, from the determined set of automation templates. The automation module 112 further causes the processing unit 202 to generate an engineering program for the engineering project from the extracted set of programming blocks. In one example, the processing unit 202 is configured to combine the extracted set of programming blocks to generate the engineering program comprising sourcecode to control the set of engineering objects 108A-N in the engineering project. Advantageously, the engineering program is generated automatically without expenditure of time and manual labour by the user.

The storage unit 206 may be a non-transitory storage medium configured for storing a database (such as database 118) which comprises server version of the plurality of programming blocks associated with the set of industrial domains.

The communication interface 208 is configured for establishing communication sessions between the one or more client devices 120A-N and the engineering system 102. The communication interface 208 allows the one or more engineering applications running on the client devices 120A-N to import/export one or more engineering projects into the engineering system 102.

In an embodiment, the communication interface 208 interacts with the interface at the one or more client devices 120A-N for allowing a plurality of engineers to access the engineering program associated with the engineering project and perform one or more actions on the set of engineering objects 108A-N.

The input-output unit 210 may include input devices a keypad, touch-sensitive display, camera (such as a camera receiving gesture-based inputs), etc. capable of receiving one or more input signals, such as user commands to process the generated engineering project. Also, the input-output unit 210 may be a display unit for displaying a graphical user interface which visualizes the set of automation templates to the user. The bus 214 acts as interconnect between the processing unit 202, the memory 204, and the input-output unit 210.

The network interface 212 is configured to handle network connectivity, bandwidth and network traffic between the engineering system 102, the client devices 120A-N and the industrial plant 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, an object behavior model generation module 304, an analysis module 306, a natural language processing module 308, an engineering object database 310, a validation module 312 and a deployment module 314. FIG. 3 is explained in conjunction with FIG. 1 and FIG. 2.

The request handler module 302 is configured for receiving the request to generate the engineering project for the industrial plant 106. For example, the request is received from one of the one or more users external to the industrial environment 100 via the network 104. In alternative embodiment, the request is received from the one or the one or more client devices 120A-N via the network 104.

The object behavior model generation module 304 is configured for generating the master name graph from the plurality of engineering projects. In one example, the master name graph is a knowledge graph based representation comprising a plurality of layers.

The analysis module 306 is configured for analyzing the master name graph to generate the plurality of automation templates. Further, the analysis module 306 is configured for applying the natural language processing algorithm on the plurality of engineering projects.

The natural language processing module 308 is configured for extracting the plurality of data items from the plurality of engineering projects.

The engineering object database 310 is configured for generating an engineering object library comprising the generated plurality of automation templates, information about the set of engineering objects 108A-N, information about physical connections between the set of engineering objects 108A-N, and a plurality of variants associated with the set of engineering objects 108A-N and the physical connections. The engineering object database 310 is configured for continuously updating the engineering object library with updated versions of the engineering project. Also, the engineering object database 310 is configured for maintaining the engineering object library in the master name graph.

The validation module 312 is configured to generate a simulation instance for the set of engineering objects 108A-N of the industrial plant 106. In one example, the simulation instance is a digital twin of the set of engineering objects 108A-N. The validation module 312 is configured to simulate execution of the generated engineering project using the set of engineering objects 108A-N in the industrial plant 106 in a simulation environment based on the generated simulation instance.

The deployment module 314 is configured for deploying the generated engineering program in one or more programmable logic controllers of the industrial plant.

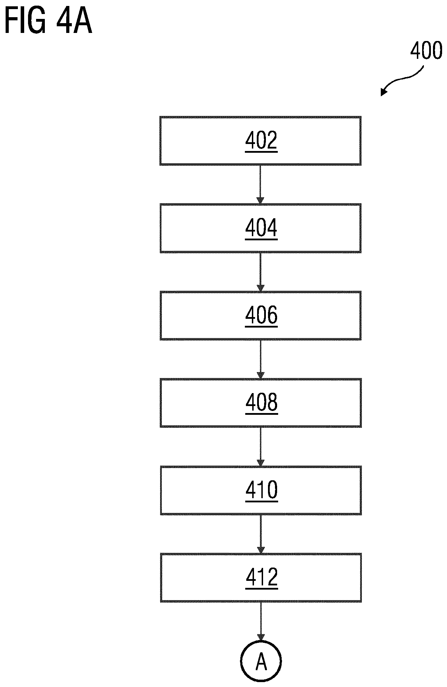

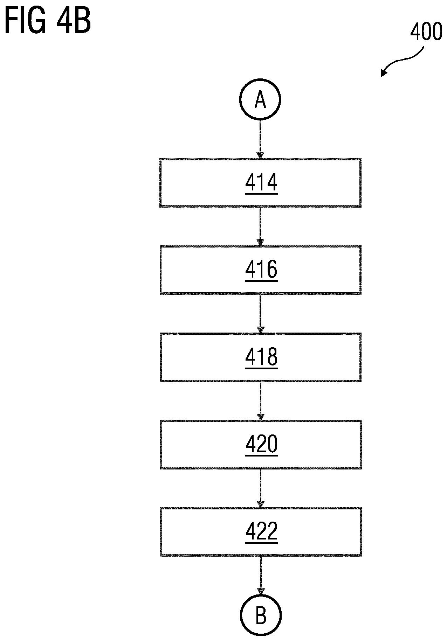

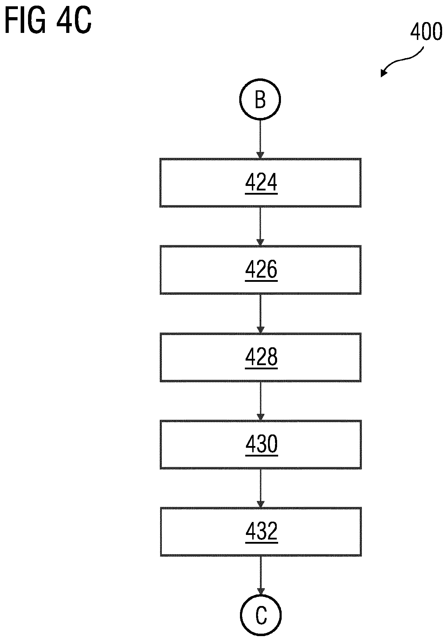

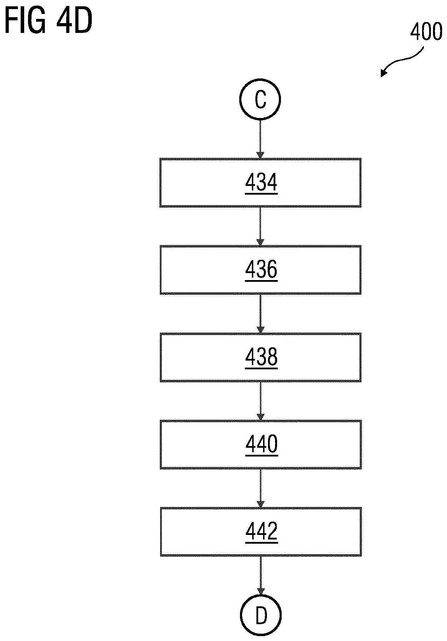

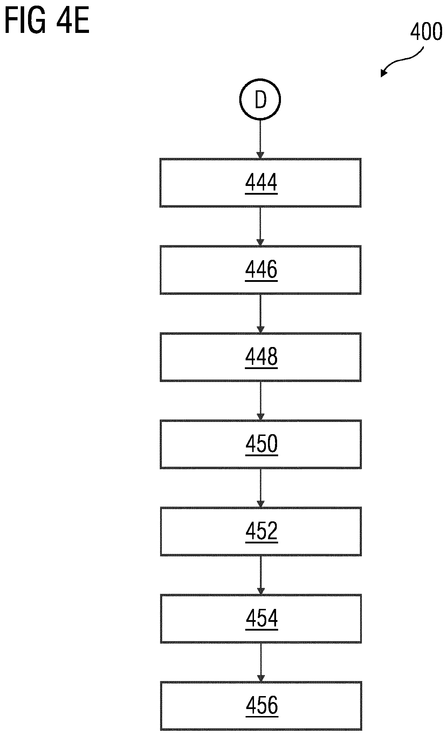

FIG 4A-E is a process flowchart illustrating an exemplary method of automatically generating an engineering project based on a process and instrumention diagram, according to an embodiment of the present invention. FIG 4A-E is described in conjunction with FIG 1, 2, and 3.

At step 402, the automation module 112 causes the processing unit 202 to receive the plurality of engineering projects from the project repository 124.

At step 404, the automation module 112 further causes the processing unit 202 to analyze the plurality of engineering projects based on an application of a natural language processing algorithm on each engineering project of the plurality of engineering projects.

At step 406, the automation module 112 causes the processing unit 202 to extract a plurality of data items from the analyzed plurality of engineering projects, based on the analysis.

At step 408, the automation module 112 further causes the processing unit 202 to apply a dependency parsing algorithm on the plurality of data items to analyze a syntactic structure of interdependencies between one or more data items of the plurality of data items. Furthermore, the dependency parsing algorithm is configured to identify a plurality of grammatical relationships between two or more data items of the plurality of data items based on the application of the dependency parsing algorithm. In one example, the processing unit is configured to filter the plurality of data items with one or more named entity recognition (NER) algorithms to identify mentions of each of the plurality of engineering objects in the plurality of data items.

At step 410, the automation module 112 further causes the processing unit 202 to analyze the identified mentions of the plurality of engineering objects. The processing unit 202 is further configured to assign a plurality of semantic roles to the identified mentions of the plurality of engineering objects based on the analysis of the plurality of data items.

At step 412, the automation module 112 further causes the processing unit 202 to analyze the plurality of grammatic relationships and the plurality of assigned semantic roles to determine a plurality of interconnections between the plurality of engineering objects.

At step 414, the automation module 112 further causes the processing unit 202 to determine the plurality of interrelationships between the plurality of data items and the plurality of engineering objects. The automation module 112 further causes the processing unit 202 to generate the plurality of dependency trees based on the plurality of interrelationships.

At step 416, the automation module 112 further causes the processing unit 202 to generate a name graph based on the plurality of dependency trees. The name graph comprises a plurality of nodes.

At step 418, the automation module 112 further causes the processing unit 202 to analyze the name graph to determine a plurality of name graph segments in the name graph. Each of the plurality of name graph segments comprises one or more nodes comprising information about a specific process in a plurality of processes implemented in the plurality of engineering projects.

At step 420, the automation module 112 further causes the processing unit 202 to analyze the plurality of name graph segments to determine a logic structure of each name graph segment of the plurality of name graph segments.

At step 422, the automation module 112 further causes the processing unit 202 to determine two or more name graph segments from the plurality of name graph segments based on the comparison, such that the determined two or more name graph segments have similar logic structures.

At step 424, the automation module 112 further causes the processing unit 202 to determine one or more name graph segments which has a logic structure which is repeated throughout the name graph. In one example, the one or more name graph segments are determined by application of a machine learning algorithm on the name graph.

At step 426, the automation module 112 further causes the processing unit 202 to classify the plurality of name graph segments into a plurality of groups such that each group of the plurality of groups is representative of a specific industrial process of a plurality of industrial processes associated with the plurality of engineering projects.

At step 428, the automation module 112 further causes the processing unit 202 to generate a plurality of alternate representations for a set of nodes in each name graph segment of each group of the plurality of groups. The automation module 112 further causes the processing unit 202 to append the generated one or more name graph segments into the name graph. The plurality of alternate representations of the set of nodes is indicative of knowledge which is newly generated from existing knowledge in the name graph and the plurality of name graph segments.

At step 430, the automation module 112 causes the processing unit 202 to execute a plurality of iterative steps iteratively to until a plurality of automation templates are generated for the plurality of engineering objects and the plurality of industrial processes in the plurality of engineering projects. In other words, the automation module 112 further causes the processing unit 202 to generate the plurality of automation templates for the plurality of engineering objects of the plurality of engineering projects.

At step 432, the automation module 112 further causes the processing unit 202 to generate a master name graph based on an analysis of the name graph, the plurality of engineering objects and the plurality of automation templates. In one example, the master name graph is generated based on the determined plurality of interrelationships between the plurality of automation templates and the plurality of engineering objects. The processing unit 202 is configured to generate the master name graph by adding, to the name graph, information associated with the determined plurality of interrelationships between the plurality of automation templates and the plurality of engineering objects.

At step 434, the automation module 112 further causes the processing unit 202 to receive a process and instrumentation diagram associated with the industrial plant 106. The processing unit 202 is configured to receive the process and instrumentation diagram via an input device such as a camera or a scanner or the one or more client devices 120A-N. In one example, the process and instrumentation diagram is an image file such as JPEG, or a bitmap image. In another example, the received process and instrumentation diagram is a portable document format.

At step 436, the automation module 112 further causes the processing unit 202 to apply an image processing algorithm on the received process and instrumentation diagram to determine a plurality of tiles in the process and instrumentation diagram.

At step 438, the automation module 112 further causes the processing unit 202 to generate a plurality of modules based on an analysis of the plurality of tiles. Each module of the plurality of modules comprises information associated with at least one process of the plurality of processes in the process and instrumentation diagram.

At step 440, the automation module 112 further causes the processing unit 202 to determine the set of processes which are to be implemented in the industrial plant 106, based on an analysis of the plurality of modules. Each process of the set of processes is indicative of a specific function of at least one module of the plurality of modules.

At step 442, the automation module 112 further causes the processing unit 202 to analyze the master name graph to determine the set of engineering objects 108A-N associated with the determined set of processes. The processing unit 202 is configured to apply at least one of a search algorithm or a traversal algorithm, and a comparison algorithm to analyze the master name graph.

At step 444, the automation module 112 further causes the processing unit 202 to search the master name graph based on information associated with the set of engineering objects 108A-N, to determine a set of name graph segments which are associated with the set of engineering objects 108A-N.

At step 446, the automation module 112 further causes the processing unit 202 to receive a user request to generate an engineering project based on the process and instrumentation diagram. The user request further comprises information associated with a plurality of desired values for a set of key performance indicators of the industrial plant 106. In one example, the user request comprises a request to maximize at least one key performance indicator of the industrial plant 106, while maintaining other key performance indicators of the set of key performance indicators of the industrial plant 106 at acceptable levels.

At step 448, the automation module 112 further causes the processing unit 202 to apply an optimizing algorithm on the master name graph based on the set of engineering objects 108A-N and further based on the plurality of desired values for the set of key performance indicators.

At step 450, the automation module 112 further causes the processing unit 202 to analyze the master name graph.

At step 452 the automation module 112 further causes the processing unit 202 to determine a set of automation templates associated with the determined at least one node of the master name graph based on the analysis. The set of automation templates are determined by analyzing the master name graph.

At step 454, the automation module 112 further causes the processing unit 202 to output the determined set of automation templates to a user. The set of automation templates are output to the user via a human machine interface or a computer or one or more output devices or the one or more client devices 120A-N.

At step 456, the automation module 112 further causes the processing unit 202 to generate the engineering project based on the set of automation templates. In one example, the engineering project is generated by concatenating the set of automation templates based on one or more defined rules.

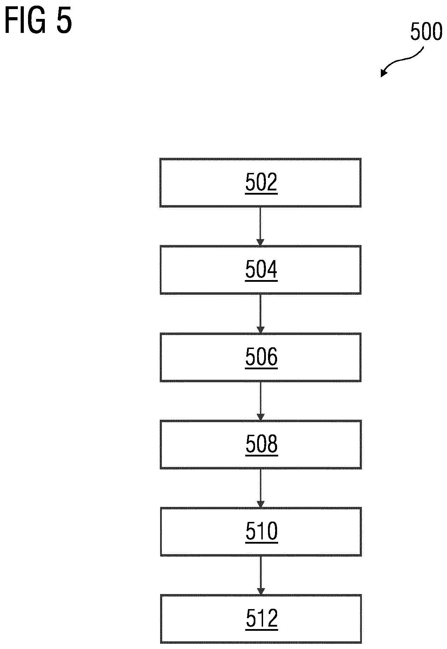

FIG 5 is a flowchart illustrating an exemplary method 500 of generating a plurality of automation templates, according to an embodiment of the present invention. FIG 4A-D is described in conjunction with FIG 1, 2, 3 and 4.

The automation module 112 further causes the processing unit 202 to generate the plurality of automation templates by iteratively executing a plurality of iterative steps ( ). In a first step 502 of the plurality of iterative steps, the processing unit 202 is configured to select a first name graph segment from the plurality of name graph segments.

In a second step 504, the processing unit 202 is configured to analyze the first name graph segment by application of a natural language processing algorithm on the first name graph segment. Information about a first process associated with the first name graph segment is indicated in at least one node of a set of nodes of the first name graph segment. Thus, the processing unit 202 is configured to determine the first process associated with the first name graph segment based on the analysis.

In a third step 506 of the plurality of iterative steps, the processing unit is configured to analyze each name graph segment in the plurality of groups of name graph segments to determine a second process associated with each name graph segment. Furthermore, the processing unit is configured to compare the first process with the second process of each name graph segment of the plurality of name graph segments. The processing unit 202 is further configured to determine, from the plurality of name graph segments, the second process which is similar to the first process, based on the comparison. Similarly, the processing unit 202 is configured to determine a set of processes which are similar to the first process.

In a fourth step 508 of the plurality of iterative steps, a set of name graph segments are determined by the processing unit 202, based on the analysis of the determined set of processes. The determined set of name graph segments of the name graph comprises information associated with at least one process of the set of processes. In other words, the automation module 112 further causes the processing unit 202 to analyze the plurality of groups of name graph segments to determine the set of name graph segments associated with the the first process. The automation module 112 further causes the processing unit 202 to determine one or more engineering objects of the plurality of engineering objects based on an analysis of the determined set of name graph segments.

At a fifth step 510 of the plurality of iterative steps, automation module 112 further causes the processing unit 202 to generate at least one automation template for the first process based on the information in the determined set of name graph segments and information associated with the one or more engineering objects.

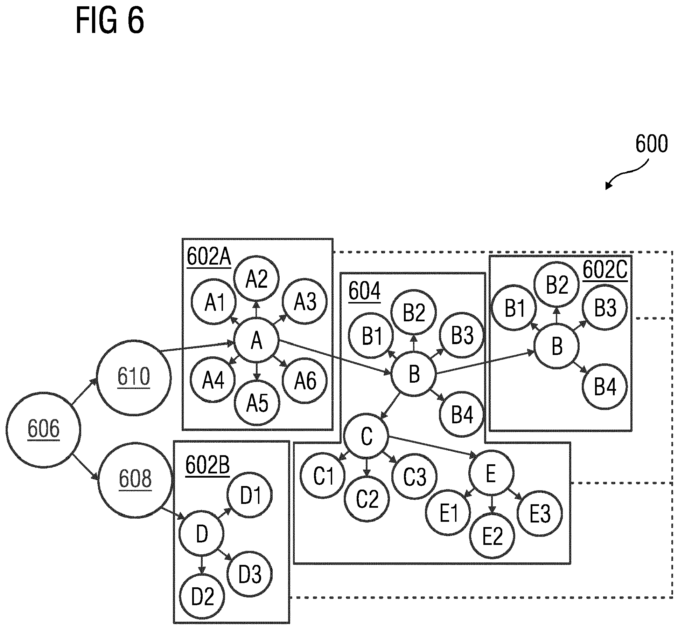

FIG 6 is a schematic representation of an exemplary process of generating a plurality of name graph segments from a name graph 600, according to an embodiment of the present invention. The name graph 600 comprise a plurality of nodes such as A1-A6, B1-B4, C1-C3, D1-D3, and E1-E3.

The name graph 600 comprise a start node 606. Furthermore, the name graph 600 comprises an active section 610 and a latent section 608. The processing unit 202 is configured to generate a plurality of name graph segments (602A-C and 604) by application of an artificial intelligence algorithm on the name graph 600.

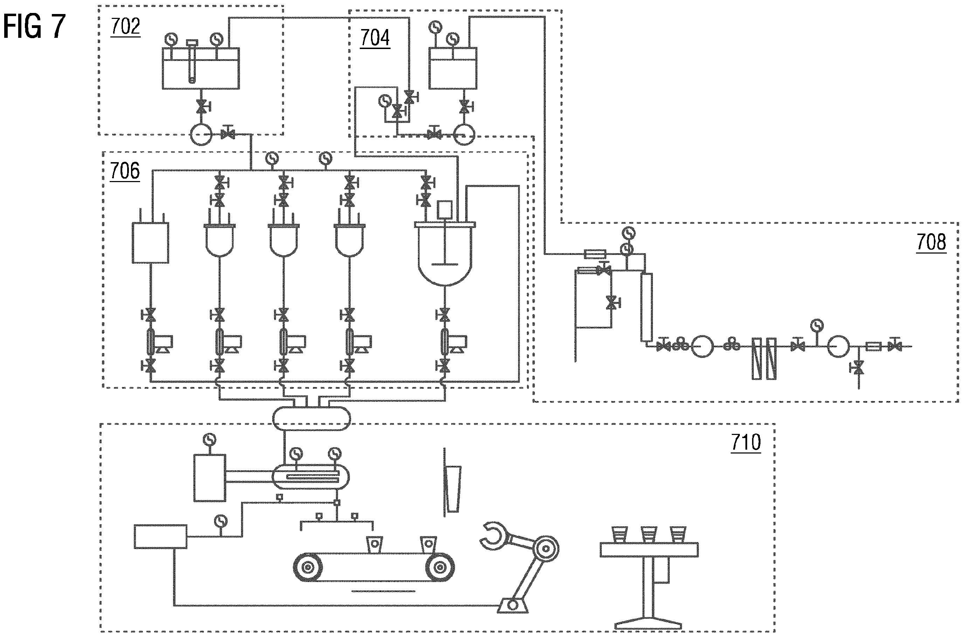

FIG 7 is a schematic representation of an exemplary process of determining a plurality of processes in a process and instrumentation diagram, according to an embodiment of the present invention. FIG 7 illustrate a process and instrumentaion diagram. The processing unit 202 is configured to determine a plurality of processes (702,704, 706, 708, and 710) from the process and instrumentation diagram by application of an image processing algorithm on the process and instrumentation diagram.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### List of reference numerals

1. an industrial environment 100
2. an engineering system 102
3. one or more client devices 120A-N
4. a network 104
5. A set of engineering objects 108A-N
6. a platform 110
7. automation module 112
8. a server 114
9. a network interface 116
10. a database 118
11. a project repository 124
12. knowledge repository 126
13. a processor(s) 202
14. an accessible memory 204
15. a storage unit 206
16. a communication interface 208
17. an input-output unit 210
18. a network interface 212
19. a bus 214
20. an integrated development environment (IDE) 216
21. a request handler module 302,
22. a object behavior model generation module 304,
23. an analysis module 306,
24. a natural language processing module 308
25. an engineering object database 310
26. a validation module 312
27. a deployment module 314.

## Claims

1. A method of generating an engineering project (106) based on a process and instrumentation diagram associated with an industrial plant (106), the method comprising:
generating, by the processing unit (202), a master name graph based on an analysis of a plurality of engineering projects of the industrial plant (106), wherein the generated master name graph comprises information associated with an interrelationship between a plurality of automation templates and a plurality of key performance indicators of the industrial plant (106);
analyzing, by the processing unit (202), a process and instrumentation diagram (106) to determine a set of engineering objects (108A-N) associated with the process and instrumentation diagram (106);
applying, on the generated master name graph, an optimization algorithm based on the determined set of engineering objects;
determining, by the processing unit (202), a set of automation templates from the plurality of automation templates based on the application of the optimization algorithm on the generated master name graph and the set of engineering objects; and
outputting, by the processing unit (202), the determined set of automation templates to a user, wherein the determined set of automation templates are recommendations for the user to generate an engineering project based on the process and instrumentation diagram (106).

2. The method according to claim 1, wherein analyzing the process and instrumentation diagram to determine the set of engineering objects comprises:
applying, by the processing unit, an image processing algorithm on the process and instrumentation diagram to determine a plurality of tiles in the process and instrumentation diagram;
determining, by the processing unit, a set of processes based on the determined plurality of tiles; and
determining, by the processing unit 202, the set of engineering objects based on the determined set of processes.

3. The method according to claim 1, wherein the generated master name graph further comprises information associated with a plurality of interrelationships between the plurality of engineering objects and the plurality of key performance indicators of the industrial plant (106).

4. The method according to claims 1 and 2, wherein the determined set of automation templates comprises at least one of an efficiency template, a diagnostic template, and a maintenance template.

5. The method according to claims 1, 2, and 3, further comprising generating, by the processing unit (202), a user interface for the engineering project (106).

6. The method according to claim 1, generation of the master name graph comprises:
receiving, by the processing unit, the plurality of engineering projects;
analyzing, by the processing unit (202), the received plurality of engineering projects by application of a natural language processing algorithm on each engineering project of the plurality of engineering projects;
extracting, by the processing unit (202), a plurality of data items from the plurality of engineering projects based on the analysis;
determining, by the processing unit (202), a plurality of interrelationships between the plurality of data items and a plurality of engineering objects of the plurality of engineering projects, by application of dependency parsing algorithm on the plurality of data items; and
generating, by the processing unit (202), a name graph based on the plurality of interrelationships between the plurality of data items and the plurality of engineering objects.

7. The method according to claim 5, wherein the generation of the master name graph further comprises:
analyzing, by the processing unit (202), the name graph to determine a plurality of name graph segments from the master name graph, wherein each name graph segment of the plurality of name graph segments is indicative of an interrelationship between:
a specific process of a plurality of processes in the plurality of engineering projects, and
one or more engineering objects of the plurality of engineering objects;
determining, by the processing unit (202), a logic structure for each name graph segment of the plurality of name graph segments based on an analysis of the plurality of name graph segments;
classifying, by the processing unit (202), the plurality of name graph segments into a plurality of groups such that each group of the plurality of groups is indicative of a specific process of a plurality of industrial processes of the plurality of engineering objects;
generating, by the processing unit (202), a plurality of alternate representations for a set of nodes in each name graph segment of the plurality of name graph segments based on an analysis of the plurality of groups of name segments;
generating, by the processing unit (202), the plurality of automation templates for the plurality of engineering objects of the plurality of engineering projects, wherein the plurality of automation templates are generated based on an analysis of the plurality of groups of name graph segments, and the plurality of alternate representations generated from the plurality of name segments; and
generating, by the processing unit, the master name graph based on an analysis of the name graph, the plurality of automation templates and the plurality of engineering objects.

8. The method according to claim 6, wherein the generation of the plurality of automation templates for the plurality of engineering objects of the engineering project (106) is performed iteratively in a plurality of iterative stages, wherein the plurality of iterative stages comprises:
selecting, by the processing unit (202), a first name graph segment from the plurality of name graph segments;
analyzing, by the processing unit (202), the first name graph segment to determine a first process associated with the first name graph segment;
analyzing, by the processing unit (202), the plurality of groups of name graph segments to determine a set of name graph segments associated with a set of processes which are similar to the first process;
determining one or more engineering objects of the plurality of engineering objects based on the determined set of name graph segments; and
generating, by the processing unit (202), at least one automation template for the first process based on the determined one or more engineering objects and the set of name graph segments.

9. The method according to claim 1, further comprising:
determining one or more automation templates from the set of automation templates based on a user input;
generating, by the processing unit (202), the engineering project based on the determined one or more automation templates.

10. The method according to claim 8, wherein the determined set of automation templates comprises at least one of a code template and a user interface template.

11. An engineering system for automatic generation of an engineering program for an engineering project (106), wherein the engineering system comprises:
one or more processor(s) (202); and
a memory (204) coupled to the one or more processor(s), wherein the memory comprises an automation module (112) stored in the form of machine-readable instructions executable by the one or more processor(s), wherein the automation module (112) is capable of performing a method according to any of the claims 1-10.

12. An industrial environment (100) comprising:
an engineering system (102) as claimed in claim 11;
a industrial plant comprising one or more physical components; and
one or more client devices (120A-N) communicatively coupled to the engineering system (102) via a network (104), wherein the engineering system (102) is configured to perform a method according to any of the claims 1 to 10.

13. A computer-program product, having machine-readable instructions stored therein, that when executed by a processing unit (202), cause the processors to perform a method according to any of the claims 1-10.
